# EUROPEAN PATENT APPLICATION

(11) **EP 2 873 993 A1**
(43) Date of publication of application: **20.05.2015**
(21) Application number: 13816907.3
(22) Date of filing: 08.07.2013
(51) Int. Cl.: G02B 5/28, B32B 7/02, B32B 27/18, B32B 27/20, G02B 1/10, G02B 5/26

(54) **INFRARED-SHIELDING FILM**

(30) Priority: 13.07.2012 JP 2012157648
(71) Applicant: Konica Minolta, Inc., Tokyo 100-7015 (JP)
(72) Inventor: KUMAGAI, Takenori, Tokyo 100-7015 (JP); KONUMA, Taro, Tokyo 100-7015 (JP); MASUDA, Haruka, Tokyo 100-7015 (JP)
(74) Representative: Gille Hrabal
(86) International application number: PCT/JP2013/068664
(87) International publication number: WO 2014/010562

(57) **Abstract**

[Problem] To provide a an infrared shielding film which realizes a balance between the hard coating properties of the cured resin layer and the suppression of peeling or cracking of the film, while having heat shielding characteristics of an infrared shielding film.

[Solution] An infrared shielding film including a substrate; an infrared reflecting layer having at least one or more low refractive index layers and at least one ormore high refractive index layers laminated therein; and a cured resin layer formed at the outermost surface, laminated together, the cured resin layer containing inorganic nanoparticles, in which the hardness obtainable by the pencil hardness test described in JIS K5600-5-4 :1999 is from 2B to 3H; the number of scratches obtainable by a steel wool test (load 500 g/cm², 10 reciprocations) is 15 or less; and the mandrel diameter at which the hard coated surface begins to crack in the bending test described in JIS K5600-5-1:1999 (cylindrical mandrel method) is 15 mm or less.

## Description

### TECHNICAL FIELD

The present invention relates to an infrared shielding film.

### BACKGROUND ART

In general, a laminated film produced by adjusting the respective optical film thicknesses of high refractive index layers and low refractive index layers and alternately laminating the layers, has been theoretically proved to selectively reflect light having a particular wavelength, and such a laminated film is utilized as a laminated film that transmits visible light and selectively reflects near-infrared radiation. Such a laminated film has been used as a reflective film for heat ray shielding, which is used on the windows of buildings, members for vehicles, and the like.

An infrared (heat ray) shielding film having such a heat ray reflective film formed on a film, is used in the state of being attached to a window of a building or a member for vehicle. Therefore, the infrared shielding film is required to have long-term weather resistance as well as initial scratch resistance, so that scratches are not generated at the time of pasting using a squeegee or at the time of cleaning. Therefore, in general, a hard coat layer intended for surface protection is formed on the film surface.

On the other hand, in regard to an infrared shielding film which includes a laminated film having an infrared reflective power, when productivity and optical characteristics are considered, the infrared range cannot be sufficiently shielded with the laminated film only. Therefore, in general, a layer produced by incorporating inorganic nanoparticles having infrared absorptive power is provided within the film, and thus transmitted light is corrected.

WO 2006/074168 suggests an infrared shielding film which includes an infrared reflecting layer having a first polymer layer and a second polymer layer alternately laminated, and a cured resin layer laminated on the infrared reflecting layer. Here, the cured resin layer contains antimony-doped tin oxide (hereinafter, ATO) or indium tin oxide (hereinafter, ITO), which are both infrared absorbers.

### SUMMARY OF INVENTION

### Technical Problem

In order to enhance hard coating properties of a cured resin layer, it is necessary to increase the amount of incorporation of the cured resin to a certain extent. However, the cured resin that constitutes the cured resin layer has a feature of having high shrinkage stress and a small coefficient of linear expansion. Therefore, in a case inwhich a cured resin layer is formed on a film, the difference in the coefficient of linear expansion is increased so that when a cured resin layer having a large amount of incorporation of the cured resin is formed, the film may undergo cracking, or the filmmay be peeled off from the adherend. Particularly, in the case of a heat ray shielding film, since the film is left to stand for a long time in a high-humidity, sunlight-irradiate environment, cracking or peeling occurs in many cases. Furthermore, since the film is adhered to a window by dampening the film with water, the problem that the resin absorbs moisture and the film is peeled off, also frequently occurs.

On the other hand, when the amount of incorporation of the cured resin is decreased in order to solve the problem of cracking or peeling as described above, there is a problem that the hardness of the cured resin layer is decreased, and the function as a hard coat layer is not sufficiently maintained.

Thus, it is an object of the present invention to provide an infrared shielding film which can realize a good balance between the hard coating properties of a cured resin layer and the suppression of peeling or cracking of the film, while having the heat shielding characteristics of an infrared shielding film.

### Means for Solving Problem

The object of the present invention is achieved by the following aspects.
1. An infrared shielding film including a substrate; an infrared reflecting layer having at least one or more low refractive index layers and at least one or more high refractive index layers laminated therein; and a cured resin layer formed at the outermost surface, laminated together,
   the cured resin layer containing inorganic nanoparticles,
   wherein the hardness obtainable by the pencil hardness test described in JIS K5600-5-4:1999 is from 2B to 3H; the number of scratches obtainable by a steel wool test (load 500 g/cm², 10 reciprocations) is 15 or less; and the mandrel diameter at which the hard coated surface begins to crack in the bending test described in JIS K5600-5-1:1999 (cylindrical mandrel method) is 15 mm or less.
2. The infrared shielding film according to 1., wherein the inorganic nanoparticles in the cured resin layer containing at least one of zinc oxide and zinc oxide doped with another metal.
3. The infrared shielding film according to 2., wherein the zinc oxide doped with another metal is antimony-doped zinc oxide, indium-doped zinc oxide, gallium-doped zinc oxide, or aluminum-doped zinc oxide.
4. The infrared shielding film according to 2. or 3. described above, wherein the content of the inorganic nanoparticles is 50% to 70% by weight relative to 100% by weight of the cured resin layer.
5. The infrared shielding film according to any one of 1. to 4., wherein at least one of the low refractive index layer and the high refractive index layer of the infrared reflecting layer contains metal oxide particles.

### DESCRIPTION OF EMBODIMENTS

An exemplary embodiment of the present invention is an infrared shielding film including a substrate; an infrared reflecting layer having at least one or more each of a low refractive index layer and a high refractive index layer laminated therein; and a cured resin layer formed at the outermost surface, laminated together, in which the cured resin layer contains inorganic nanoparticles; the hardness obtainable by the pencil hardness test described in JIS K5600-5-4:1999 is from 2B to 3H; the number of scratches obtainable by a steel wool test (load 500 g/cm², 10 reciprocations) is 15 or less; and the mandrel diameter at which the hard coated surface begins to crack in the bending test described in JIS K5600-5-1:1999 (cylindrical mandrel method) is 15 mm or less.

As in the case of WO 2006/074168, in an infrared shielding film having a cured resin layer containing tin oxide-based particles, if the amount of incorporation of the cured resin of the cured resin layer is increased in order to enhance hard coating properties, there may occur a problem that after the infrared shielding film is adhered by dampening the film with water and is left to stand for several days, the films is detached from the window. This is speculated to be because after the adhesion by dampening the film with water, the cured resin in the film absorbs water and expand, the hard coat layer cannot conform to its expansion, and the film has been detached.

As such, there have been problems attributable to the cured resin included in the cured resin layer; however, there is a problem that if the amount of incorporation of the cured resin is decreased, hardness of the cured resin layer is decreased, and the functions as a hard coat layer are not sufficiently maintained. That is, hard coating properties and bending resistance are in a trade-off relationship, and conventional films do not satisfy both.

In the present invention, when inorganic nanoparticles are incorporated into the cured resin layer, a balance between hard coating properties and bending resistance of the cured resin layer can be realized while maintaining the heat shielding characteristics of the infrared shielding film, without depending on the amount of incorporation of the cured resin. That is, according to the present invention, an infrared shielding film which realizes a balance between hard coating properties of the cured resin layer and peeling or cracking of the film, while having the heat shielding characteristics of an infrared shielding film, can be realized. Furthermore, according to the present invention, an infrared shielding film having enhanced long-term weather resistance, particularly having suppressed peeling of the film from a substrate or enhanced scratch resistance, can be provided.

### [Infrared shielding film]

According to the present invention, hardness of the cured resin layer surface side of the film is from 2B to 3H. When the hardness of the cured resin layer is 3B or less, the function of the hard coat layer is deteriorated. On the other hand, when the hardness is 4H or more, the curling properties of the film are deteriorated, which is not preferable. An infrared shielding film may be adhered by dampening the film with water while winding the film, when the film is pasted to a window or the like. Thus, if the curling properties of the film are deteriorated, usability is decreased. Here, the pencil hardness refers to a value obtained by curing a coating film of the cured resin layer, subsequently fabricating a specimen, and measuring the pencil hardness of the coating film according to JIS K5600-5-4:1999. The hardness of the cured resin layer surface side of the film is preferably from 2B to H.

According to the present invention, the number of scratches caused by a steel wool test (load 500 g/cm², 10 reciprocations) in the cured resin layer surface side of the film is 15 or less. When the number of scratches caused by a steel wool test (load 500 g/cm², 10 reciprocations) in the cured resin layer is 15 or less, the cured resin layer acquires scratch resistance, and thus acquires high hard coating properties. In addition, since it is more preferable as the number of scratches caused by a steel wool test is smaller, the lower limit is 0. Here, the steel wool test is carried out such that, as will be described in the Examples, a load of 500 g/cm² is appliedto #0000 steel wool, the film is subjected to friction by 10 reciprocations at a stroke of 100 mm and a speed of 30 mm/sec, and the scratches generated after the friction are measured by visual inspection. The number of scratches caused by a steel wool test (load 500 g/cm², 10 reciprocations) in the cured resin layer is preferably 10 or less, and more preferably 0, that is, a state without any scratches.

The infrared shielding film is such that the diameter of the mandrel at which the hard coated surface begins to crack as a result of the bending resistance test (cylindrical mandrel method) described in JIS K5600-5-1:1999 is 15 mm or less. The diameter of the mandrel is preferably 10 mm or less. The hard coated surface is the outermost surface on the cured resin layer side. The lower limit is not particularly defined, but usually the diameter of the mandrel is 2 mm or more. When the infrared shielding film has such bendability, the film on the cured resin layer side is prevented from curling, and when the film is adhered to a base, peeling of the film from the base is reduced. Furthermore, when the infrared shielding film has such bendability in the early stage, peeling of the film over time is also suppressed. In addition, cracking at the time of punching processing of the film is also reduced. Here, the bending resistance test is measured by the method described in Examples described below.

Hereinafter, the constituent elements of the infrared shielding film of the present invention are described in detail.

### [Cured resin layer]

The infrared shielding film of the present invention is formed by laminating, as a surface protective layer for increasing scratch resistance, a cured resin layer containing a resin that is cured by heat, ultraviolet radiation or the like, on the outermost surface on the infrared reflecting layer side of a substrate. In a case in which an infrared reflecting layer is formed on either side of the substrate, the cured resin layer is formed on the outermost surface on at least one of the infrared reflecting layer sides. The cured resin layer is provided on the film surface on the opposite side of the adherend base with respect to the substrate, in order to suppress any external physical damage. Therefore, in a case in which the film has a tacky adhesive layer, the cured resin layer is laminated on the opposite side of the tacky adhesive layer, with the substrate interposed therebetween.

The cured resin layer contains inorganic nanoparticles in order to satisfy the film characteristics described above. Here, nanoparticles refer to particles having an average (primary) particle size of 1000 nm or less, and particles having an average particle size in the range of 1 to 500 nm are more preferred, while particles having an average particle size in the range of 1 to 100 nm are even more preferred. The particle size means the largest distance among the distances between any arbitrary two points on the contour line of a particle observed using an observation means such as a transmission electron microscope (observed surface). Regarding the value of the average particle size, the value calculated as the number average value of the particle sizes of the particles observed within several to several ten viewing fields using an observation means such as a transmission electron microscope. When the inorganic particles are nanoparticles, visible light transmissivity of the hard coat layer is secured. Examples of such inorganic nanoparticles include zinc oxide, silicon oxide, alumina, zirconia, titanium oxide, lanthanum boride, cerium oxide, these compounds doped with other metals, and mixtures thereof. In addition to these, nanoparticles of Cd/Se, GaN, Y₂O₃, Au, Ag, and Cu can also be utilized. Suitable examples of the inorganic nanoparticles include silicon oxide, zinc oxide, zirconium, lanthanum boride, and these compounds doped with other metals; and more preferred examples include zinc oxide, zinc oxide doped with other metals, zirconia, lanthanumboride, and mixtures thereof. Among them, it is particularly preferable that the inorganic nanoparticles contain at least one of zinc oxide and zinc oxide doped with other metals, as described below.

The amount of incorporation of the inorganic nanoparticles in the cured resin layer is preferably 30% to 80% by weight, and more preferably 50% to 70% by weight, relative to the total amount of the cured resin layer (in terms of solid content). When the content of the inorganic nanoparticles is in such a range, it is feasible to achieve a balance between the hard coating properties of the cured resin layer and the suppression of peeling or cracking of the film.

A compound doped with another metal as used in the present specification refers to either of a state in which another metal is incorporated into the compound, or a state in which the compound and another metal (oxide) are bonded to each other. For example, antimony-doped zinc oxide means either of a state in which antimony has been incorporated into zinc oxide, or a state in which zinc oxide and antimony oxide are bonded to each other. Preferred examples of zinc oxide doped with other metals include antimony-doped zinc oxide, indium-doped zinc oxide (indium zinc composite oxide: IZO), gallium-doped zinc oxide (gallium zinc composite oxide: GZO), and aluminum-doped zinc oxide (aluminum zinc composite oxide: AZO) ; and more preferred examples include gallium-doped zinc oxide (gallium zinc composite oxide: GZO) and aluminum-doped zinc oxide (aluminum zinc composite oxide: AZO). The content of at least one of zinc oxide and zinc oxide doped with another metal in the inorganic nanoparticles is preferably 65% to 100% by weight, and more preferably 80% to 100% by weight, and it is particularly preferable that the inorganic nanoparticles is formed from at least one of zinc oxide and zinc oxide doped with another metal. When the content of at least one of zinc oxide and zinc oxide doped with another metal in the inorganic nanoparticles is in the range described above, it is more feasible to achieve a balance between the hard coating properties of the cured resin layer and the suppression of peeling or cracking of the film.

That is, according to a suitable exemplary embodiment of the present invention, the cured resin layer suitably contains zinc oxide and/or zinc oxide doped with another metal (hereinafter, also referred to as zinc oxide-based particles).

The zinc oxide-based particles have lower absorptive power in the near-infrared region compared with ATO or ITO (hereinafter, also referred to as tin oxide-based particles), and it is necessary to add the zinc oxide-based particles in an amount by weight of about 1.3 times the amount of the tin oxide-based particles. Thus, the content of the cured resin in the cured resin layer is proportionally decreased. As described above, it has been contemplated that if the cured resin fraction is small, hardness and scratch resistance are decreased, and the function as a hard coat layer is deteriorated. However, the inventors of the present invention surprisingly found that even if the amount of addition of zinc oxide-based particles in the cured resin layer is increased, and the content of the cured resin is decreased, the surface hardness of the film is maintained. Furthermore, since the amount of the cured resin component that causes shrinkage stress is small, shrinkage of the hard coat layer is reduced, and thus a film having less curling than the conventional films can be produced. Therefore, when zinc oxides are used as infrared absorbers in the cured resin layer, an infrared shielding film having less cracking or peeling can be formed.

Furthermore, a film having a cured resin layer containing tin oxide-based particles has a problem that when the film is left to stand outdoors for one year, the film enters a state of being susceptible to scratching compared with the initial scratch resistance. This is speculated to be because, since the film has been exposed for a long time to ultraviolet radiation that is included in sunlight, the hard coat layer is deteriorated and is in a state of being susceptible to scratching. Since zinc oxide-based particles have a feature of having high UV absorptive power than tin oxide-based particles, deterioration of the cured resin layer caused by ultraviolet radiation can be reduced, and reduction of scratch resistance due to exposure for a long time can be prevented. When the film is used for exterior posting rather than for interior posting, since the film is more highly affected by ultraviolet radiation, the effects of the present invention are manifested more noticeably.

The zinc oxide-based particles may be used singly, or in combination of two or more kinds thereof.

The amount of incorporation of the zinc oxide-based particles in the cured resin layer is preferably 30% to 80% by weight, more preferably 30% to 70% by weight, and from the viewpoint of visible light transmittance, even more preferably 50% to 70% by weight, relative to the total amount of the cured resin layer (in terms of solid content). When the cured resin layer contains zinc oxide in the range described above, even if the amount of incorporation of the cured resin is small (for example, the amount of the cured resin in the cured resin layer is 50% by weight or less), the hard coating properties of the film is maintained. Also, when the amount of incorporation of the zinc oxide-based particles in the cured resin layer is in the range described above, since the amount of incorporation of the zinc oxide-based particles is large, deterioration of the film over time caused by the exposure to ultraviolet radiation is further suppressed.

Regarding the zinc oxide-basedparticles, a commercially available zinc oxide-based particle dispersion dispersed in a solvent or water may be used, and examples of such a commercially available product include CELNAX CX-Z603M-F2 (AZO), CELNAX CX-Z610M-F2 (AZO), CELNAX CX-Z210IP-F (AZO), CELNAX CX-Z400K (AZO), CELNAX CX-Z210IP-F2 (AZO), CELNAX CX-Z410M-F (AZO), CELNZX CX-Z401M-F (AZO), and IR-40K (AZO); all manufactured by Nissan Chemical Industries, Ltd.

In the present invention, although inorganic nanoparticles are incorporated into the cured resin layer as described above, the inorganic nanoparticles may also be used as a mixture with an infrared absorber other than the nanoparticles, from the viewpoints of weather resistance and the absorption spectrum as long as the characteristics of the film are satisfied. For example, lanthanum boride, a nickel complex compound, an immonium-based compound, a phthalocyanine-based compound, and an aminium-based compound can be used. The amount of incorporation of the other infrared absorber in the cured resin layer is preferably 5% by weight or less, more preferably 3% by weight or less, and most preferably 0% by weight.

Regarding the cured resin used in the cured resin layer, a thermoset resin or an active energy ray-cured resin may be used; however, from the viewpoint that molding is easier, an active energy ray-curable resin is preferred. Such cured resins may be used singly, or in combination of two or more kinds thereof. Also, for the cured resin, a commercially available product may be used, or a synthesized product may be used.

An active energy ray-cured resin refers to a resin that is cured through a crosslinking reaction or the like as a result of the irradiation of active energy radiation such as ultraviolet radiation or electron beam. Regarding the active energy ray-cured resin, a component containing a monomer having an ethylenically unsaturated double bond is preferably used. The resin is cured by irradiating active energy radiation such as ultraviolet radiation or electron beam, and thus an active energy ray-cured resin layer is formed. Representative examples of the active energy ray-cured resin include an ultraviolet-curable resin and an electron beam-curable resin; and, an ultraviolet-curable resin that is cured by ultraviolet irradiation is preferred.

Regarding the ultraviolet-curable resin, for example, an ultraviolet-curable urethane acrylate-based resin, an ultraviolet-curable polyester acrylate-based resin, an ultraviolet-curable epoxy acrylate resin, an ultraviolet-curable polyol acrylate-based resin, or an ultraviolet-curable epoxy resin is preferably used. Among them, an ultraviolet-curable acrylate-based resin is preferred.

An ultraviolet-curable acrylic urethane-based resin can be easily obtained by allowing a product that is generally obtained by a reaction between a polyester polyol and an isocyanate monomer or a prepolymer, to further react with an acrylate-based monomer having a hydroxyl group, such as 2-hydroxyethyl acrylate, 2-hydroxyethyl methacrylate (hereinafter, acrylate is intended to include methacrylate, and only acrylate will be indicated), or 2-hydroxypropyl acrylate. For example, a mixture of 100 parts of UNIDIC 17-806 (manufactured by DIC Corp.) described in Japanese Patent Application Laid-Open (JP-A) No. 59-151110, and 1 part of CORONATE L (manufactured by Nippon Polyurethane Industry Co., Ltd.), or the like is preferably used.

An ultraviolet-curable polyester acrylate-based resin can be easily obtained by generally allowing a terminal hydroxyl group or carboxyl group of a polyester to react with a monomer such as 2-hydroxyethyl acrylate, glycidyl acrylate, or acrylic acid (for example, JP-A No. 59-151112).

An ultraviolet-curable epoxy acrylate-based resin can be obtained by allowing a terminal hydroxyl group of an epoxy resin to react with a monomer such as acrylic acid, acrylic acid chloride, or glycidyl acrylate.

Examples of an ultraviolet-curable polyol acrylate-based resin include ethylene glycol (meth) acrylate, polyethylene glycol di(meth)acrylate, glycerin tri(meth)acrylate, trimethylolpropane triacrylate, pentaerythritol triacrylate, pentaerythritol tetraacrylate, dipentaerythritol pentaacrylate, dipentaerythritol hexaacrylate, and alkyl-modified dipentaerythritol pentaacrylate.

Examples of a thermosetting resin include inorganic materials represented by polysiloxane.

A polysiloxane-based hard coat employs a starting raw material represented by general formula: RₘSi(OR')ₙ. R and R' each represent an alkyl group having 1 to 10 carbon atoms; and m and n each represent an integer that satisfies the relationship of m + n = 4. Specific examples include tetramethoxysilane, tetraethoxysilane, tetraisopropoxysilane, tetra-n-propoxysilane, tetra-n-butoxysilane, tetra-sec-butoxysilane, tetra-tert-butoxysilane, tetrapentaethoxysilane, tetrapentaisopropoxysilane, tetrapenta-n-propoxysilane, tetrapenta-n-butoxysilane, tetrapenta-sec-butoxysilane, tetrapenta-tert-butoxysilane, methyltriethoxysilane, methyltripropoxysilane, methyltributoxysilane, dimethyldimethoxysilane, dimethyldiethoxysilane, dimethylethoxysilane, dimethylmethoxysilane, dimethylpropoxysilane, dimethylbutoxysilane, dimethyldimethoxysilane, dimethyldiethoxysilane, and hexyltrimethoxysilane. Furthermore, γ-(2-aminoethyl)aminopropyltrimethoxysilane, γ-(2-aminoethyl)aminopropylmethyldimethoxysilane, β-(3,4-epoxycyclohexyl)ethyltrimethoxysilane, N-β-(N-aminobenzylaminoethyl)-γ-aminopropylmethoxysilane hydrochloride, γ-glycidoxypropyltrimethoxysilane, aminosilane, methylmethoxysilane, vinyltriacetoxysilane, γ-mercaptopropyltrimethoxysilane, γ-chloropropyltrimethoxysilane, hexamethyldisilazane, vinyltris(β-methoxyethoxy)silane, or octadecyldimethyl[3-(trimethoxysilyl)propyl]ammonium chloride can also be used. Such a material in a state of having a hydrolysable group such as a methoxy group or an ethoxy group substituted by a hydroxyl group, is generally used as a polyorganosiloxane-based hard coat. When this is applied on a substrate and is heated and cured, a dehydration condensation reaction is accelerated, and curing/crosslinking occurs. Thus, a hard coat is formed. Among these polyorganosiloxane-based hard coats, a hard coat having a methyl group as the organic group that is not detached by hydrolysis, has highest weather resistance. Furthermore, in the case of a methyl group, since methyl groups are uniformly and densely distributed on the surface after the formation of a hard coat, the falling angle is also low. Therefore, in the present application, it is preferable to use methylpolysiloxane.

If the film thickness of a polysiloxane-based hard coat is too thick, there is a risk that the hard coat layer may have cracks due to stress; and if the film thickness is too thin, appropriate hardness cannot be maintained. Therefore, the thickness is preferably 1 to 5 µm, and a thickness of 1.5 to 3 µm is preferred.

Regarding the polyorganosiloxane-based hard coat, specifically, SARCOAT series (manufactured by Doken Co., Ltd.), SR2441 (Dow Corning Toray Co., Ltd.), KF-86 (Shin-Etsu Chemical Co., Ltd.), PERMA-NEW (registered trademark) 6000 (California Hard coating Co.), and the like can be used.

The amount of incorporation of the cured resin in the cured resin layer is preferably 20% to 70% by weight, and more preferably 30% to 50% by weight, relative to 100% by weight in total (in terms of solid content) of the cured resin layer.

Moreover, examples of a photosensitizer (radical polymerization initiator) for these resins that can be used include benzoin and alkyl ethers thereof, such as benzoin, benzoin methyl ether, benzoin ethyl ether, benzoin isopropyl ether, and benzyl methyl ketal; acetophenones such as acetophenone, 2,2-dimethoxy-2-phenylacetophenone, and 1-hydroxycyclohexyl phenyl ketone; anthraquinones such as methylanthraquinone, 2-ethylanthraquinone, and 2-amylanthraquinone; thioxanthones such as thioxanthone, 2,4-diethylthioxanthone, and 2,4-diisopropylthioxanthone; ketals such as acetohpenone dimethyl ketal and benzyl dimethyl ketal; benzophenones such as benzophenone and 4,4-bismethylaminobenzophenone; and azo compounds. These can be used singly or in combination of two or more kinds thereof. In addition, these photosensitizers can be used in combination with photoinitiation aids, such as tertiary amines such as triethanolamine and methyldiethanolamine; and benzoic acid derivatives such as 2-dimethylaminoethylbenzoic acid and ethyl 4-dimethylaminobenzoate. The amount of use of these radical polymerization initiators is preferably 0.5 to 20 parts by weight, and more preferably 1 to 15 parts by weight, relative to 100 parts by weight of the polymerizable component of the resin.

The thickness of the cured resin layer is preferably 0.1 to 20 µm, more preferably 1 to 15 µm, and even more preferably 3 to 10 µm. When the thickness is 0.1 µm or more, the hard coating properties tend to be enhanced, and when the thickness is 20 µm or less, there is a tendency that curling of the hard coat layer occurs less, and bending resistance is maintained.

The cured resin layer can be produced by applying a composition for forming a cured resin layer (coating liquid) by coating with a wire bar, spin coating or dip coating, and the cured resin layer can also be produced by a dry film forming method such as vapor deposition. Also, the cured resin layer can also be formed by applying the aforementioned composition (coating liquid) using a continuous coating apparatus such as a die coater, a gravure coater or a comma coater. In the case of a polysiloxane-based hard coat, a heat treatment at a temperature of from 50°C to 150°C for 30 minutes to several days is needed for accelerating curing/crosslinking of the hard coat after the coating liquid is applied, and the solvent is dried. In consideration of heat resistance of the coating substrate or stability of the substrate when rolled, it is preferable to treat the hard coat layer at a temperature of from 40°C to 80°C for 2 days or more. In the case of an active energy ray-cured resin, since the reactivity of the resin varies depending on the irradiation wavelength, illumination intensity, and the amount of light of the active energy radiation, it is necessary to select optimal conditions in accordance with the resin used.

The composition for forming a cured resin layer (coating liquid) may include a solvent, or if necessary, the composition may be diluted by incorporating an appropriate amount of a solvent. The organic solvent that is incorporated into the coating liquid is appropriately selected from hydrocarbons (toluene and xylene), alcohols (methanol, ethanol, isopropanol, butanol, and cyclohexanol), ketones (acetone, methyl ethyl ketone, and methyl isobutyl ketone), esters (methyl acetate, ethyl acetate, and methyl lactate), glycol ethers, and other organic solvents, or mixtures thereof can be used.

When adhesiveness of the cured resin layer to an underlayer cannot be obtained, an anchor layer (primer layer) can be formed before laminating the cured resin layer. The film thickness of the anchor layer is not particularly limited, and the thickness is about 0.1 to 10 µm. Suitable examples of the resin that constitutes the anchor layer include a polyvinyl acetal resin and an acrylic resin, and examples thereof are listed below.

### [Polyvinyl acetal resin]

A polyvinyl acetal-based resin is a resin obtained by, for example, acetalizing polyvinyl alcohol by a reaction with at least one appropriate aldehyde, and specific examples thereof include polyvinyl acetal, polyvinyl formal, polyvinyl butyral or a polyvinyl butyral containing a partially formalized portion, and a copolymerized acetal such as polyvinyl butyral acetal. These polyvinyl acetal-based resins are available as, for example, DENKA BUTYRAL #2000L, #3000-1, #3000-K, #4000-1, #5000-A and #6000-C, DENKA FORMAL #20, #100 and #200, manufactured by Denki Kagaku Kogyo K.K.; S-LEC B series BL-1, BL-2, BL-S, BM-1, BM-2, BH-1, BX-1, BX-10, BL-1, BL-SH and BX-L, S-LEC K series KS-10, S-LEC KW series KW-1, KW-3 and KW-10, and S-LEC KX series KX-1 and KX-5, all manufactured by Sekisui Chemical Co., Ltd. Also, these polyvinyl acetal-based resins may contain other repeating units as well.

The degree of acetalization of these polyvinyl acetal-based resins is preferably about 5% to 65% by mole, and more preferably, the degree of acetalization is about 8% to 50% by mole from the viewpoints of solubility in water and the effect of adhesiveness. If the degree of acetalization is less than 5% by mole, the effect of adhesiveness to the hard coat layer is deteriorated, and if the degree of acetalization is more than 65% by mole, the effect of adhesiveness to the reflecting layer is deteriorated.

### [Acrylic resin]

Examples of an acrylic resin include resins that contain acrylic monomers, for example, methacrylic acid, acrylic acid, esters or salts thereof, acrylamide, and methacrylamide as polymer constituent components. Examples thereof include acrylic acid; methacrylic acid; acrylic acid esters, for example, alkyl acrylates (for example, methyl acrylate, ethyl acrylate, n-propyl acrylate, isopropyl acrylate, n-butyl acrylate, isobutyl acrylate, t-butyl acrylate, 2-ethylhexyl acrylate, cyclohexyl acrylate, phenyl acrylate, benzyl acrylate, and phenylethyl acrylate), hydroxy-containing alkyl acrylates (for example, 2-hydroxyethyl acrylate and 2-hydroxypropyl acrylate); methacrylic acid esters, for example, alkyl methacrylates (for example, methyl methacrylate, ethyl methacrylate, n-propyl methacrylate, isopropyl methacrylate, n-butyl methacrylate, isobutyl methacrylate, t-butyl methacrylate, 2-ethylhexyl methacrylate, cyclohexyl methacrylate, phenyl methacrylate, benzyl methacrylate, and phenylethyl methacrylate), hydroxy-containing alkyl methacrylates (for example, 2-hydroxyethyl methacrylate and 2-hydroxypropyl methacrylate); acrylamide; substituted acrylamides, for example, N-methylacrylamide, N-methylolacrylamide, N,N-dimethylolacrylamide, and N-methoxymethylacrylamide; methacrylamide; substituted methacrylamides, for example, N-methylmethacrylamide, N-methylolmethacrylamide, N,N-dimethylolmethacrylamide, and N-methoxymethylmethacrylamide; amino group-substituted alkyl acrylates, for example, N,N-diethylaminoethyl acrylate; amino group-substituted alkyl methacrylates, for example, N,N-diethylami methacrylate; epoxy group-containing acrylates, for example, glycidyl acrylate; epoxy group-containing methacrylates, for example, glycidyl methacrylate; acrylic acid salts, for example, sodium salt, potassium salt and ammonium salt; and methacrylic acid salts, for example, sodium salt, potassium salt, and ammonium salt. The monomers described above can be used singly or in combination of two or more kinds. A methyl methacrylate-ethyl acrylate-ammonium acrylate-acrylamide copolymer, a methacrylamide-butyl acrylate-sodium acrylate-methyl methacrylate-N-methylolacrylamide-based copolymer, and the like may be preferably used. Acrylic resins can be produced as acrylic emulsions, aqueous acrylic solutions, acrylic dispersions and the like, and the resin are also purchased.

These resins described above can be used singly or as mixtures of two or more kinds thereof. Furthermore, isocyanates can be used as crosslinking agents, and suitable examples of organic diisocyanate compounds include cyclic diisocyanates such as xylene diisocyanate, isophorone diisocyanate, and alicyclic diisocyanates; aromatic diisocyanates such as tolylene diisocyanate and 4,4-diphenylmethane diisocyanate; and aliphatic diisocyanates such as hexamethylene diisocyanate. When the resins are used in aqueous systems, block isocyanates can also be used, and for example, Product No. 214 of Baxenden Chemicals, Ltd. can be used.

For other constituent elements of the infrared shielding film of the present invention, conventionally known constituent elements can be appropriately used. The other constituent elements are described below in detail.

### [Substrate (support)]

Various resin films can be used as the substrate (film support) used in the present invention, and polyolefin films (polyethylene, polypropylene, and the like), polyester films (polyethylene terephthalate, polyethylene naphthalate, and the like), polyvinyl chloride, cellulose triacetate, and the like can be used. Preferred are polyester films. There are no particular limitations on the polyester film (hereinafter, referred to as polyester); however, it is preferably a polyester containing a dicarboxylic acid component and a diol component as principal constituent components and having film formability. Examples of the dicarboxylic acid component of the principal constituent components include terephthalic acid, isophthalic acid, phthalic acid, 2,6-naphthalenedicarboxylic acid, 2,7-naphthalenedicarboxylic acid, diphenylsulfone dicarboxylic acid, diphenyl ether dicarboxylic acid, diphenylethane dicarboxylic acid, cyclohexanedicarboxylic acid, diphenyldicarboxylic acid, diphenyl thioether dicarboxylic acid, diphenyl ketone dicarboxylic acid, and phenylindane dicarboxylic acid. Furthermore, examples of the diol component include ethylene glycol, propylene glycol, tetramethylene glycol, cyclohexanedimethanol, 2,2-bis(4-hydroxyphenyl)propane, 2,2-bis(4-hydroxyethoxyphenyl)propane, bis(4-hydroxyphenyl)sulfone, bisphenolfluorene dihydroxyethyl ether, diethylene glycol, neopentyl glycol, hydroquinone, and cyclohexanediol. Among the polyesters containing these as the principal constituent components, polyesters containing, as principal constituent components, terephthalic acid and 2,6-naphthalenedicarboxylic acid as the dicarboxylic acid component, and ethylene glycol and 1, 4-cyclohexanedimethanol as diol components, are preferred from the viewpoints of transparency, mechanical strength, dimensional stability, and the like. Among them, polyesters containing polyethylene terephthalate and polyethylene naphthalate as principal constituent components; copolymerized polyesters formed from terephthalic acid, 2,6-naphthalenedicarboxylic acid and ethylene glycol; and polyesters containing mixtures of two or more kinds of these polyesters as principal constituent components, are preferred.

The thickness of the film support used in the present invention is preferably 10 to 300 µm, and particularly preferably 20 to 150 µm. Also, the film support of the present invention may be formed from two sheets superposed together, and in this case, the kinds of the sheets may be identical or may be different.

The substrate can be produced by a general method that is conventionally known. For example, an unstretched substrate that is substantially amorphous and non-oriented can be produced by melting a resin to be used as the material with an extruder, and rapidly cooling the resin by extruding the resin with an annular die or a T-die. Furthermore, a stretched support can be produced by stretching an unstretched substrate by a known method such as uniaxial stretching, tenter type sequential biaxial stretching, tenter type simultaneous biaxial stretching, or tubular type simultaneous biaxial stretching, in the flow (longitudinal axis) direction of the substrate or in a direction perpendicular to the flow direction (transverse axis) of the substrate. The stretch ratio in this case can be appropriately selected in accordance with the resin that is used as the raw material of the substrate, but the stretch ratio is preferably 2 to 10 times in the longitudinal axis direction and the transverse axis direction, respectively.

### [Infrared reflecting layer]

The infrared reflecting layer is a laminated body in which at least one low refractive index layer and at least one high refractive index layer are laminated. A suitable embodiment of the infrared reflecting layer is an embodiment of an alternating laminated body in which low refractive index layers and high refractive index layers are alternately laminated. Meanwhile, in the present specification, a refractive index layer having a higher refractive index compared with the other refractive index layer is referred to as a high refractive index layer, and a refractive index layer having a lower refractive index compared with the other refractive index layer is referred to as a low refractive index layer. According to the present specification, the terms "high refractive index layer" and "low refractive index layer" mean that when the difference between the refractive indices of two adjacent layers is compared, a refractive index layer having a higher refractive index is designated as the high refractive index layer, and a refractive index layer having a lower refractive index is designated as the low refractive index layer. Therefore, the terms "high refractive index layer" and "low refractive index layer" are intended to include all forms other than the form in which, when attention is paid to two adjacent refractive index layers for each refractive index layer that constitute the infrared reflecting layer, the respective refractive index layers have the same refractive index.

The infrared reflecting layer includes at least one laminated body (unit) composed of two layers having different refractive indices, that is, a high refractive index layer and a low refractive index layer; and, the high refractive index layer and the low refractive index layer are contemplated to be as follows.

For example, there are occasions in which the component that constitutes a high refractive index layer (hereinafter, high refractive index layer component) and the component that constitutes a low refractive index layer (hereinafter, low refractive index layer component) are mixed at the interface of the two layers, and form a layer containing the high refractive index layer component and the low refractive index layer component (mixed layer). In this case, within the mixed layer, a collection of sites containing 50% by weight or more of the high refractive index layer component is designated as the high refractive index layer, and a collection of sites containing more than 50% by weight of the low refractive index layer component is designated as the low refractive index layer. Specifically, in a case in which the low refractive index layer contains a first metal oxide as the low refractive index layer component, and the high refractive index layer contains a second metal oxide as the high refractive index layer component, the metal oxide concentration profile in the film thickness in such a laminated film is measured, and the high refractive index layer or the low refractive index layer can be determined based on the composition. The metal oxide concentration profile of a laminated film can be monitored by performing etching from the surface in the depth direction using a sputtering method, performing sputtering at a rate of 0.5 nm/min using an XPS surface analyzer, with the outermost surface being defined as 0 nm, and measuring the atomic composition ratio. Also, in a laminated body in which the low refractive index component or the high refractive index component does not include any metal oxide but is formed only from an organic binder, for example, the carbon concentration in the film thickness direction is measured similarly from the organic binder concentration profile, and thereby it is confirmed that a mixed region exists. The composition is then analyzed by EDX, and thereby each of the layers that have been etched by sputtering can be determined as a high refractive index layer or a low refractive index layer.

The XPS surface analyzer is not particularly limited, and any model can be used; however, an ESCALAB-200R manufactured by VG Scientific, Ltd. was used. Mg is used for the X-ray anode, and measurement is made at an output power of 600 W (accelerated voltage: 15 kV, emission current: 40 mA).

In general, it is preferable for the infrared reflecting layer to design the difference between the refractive indices of the low refractive index layer and the high refractive index layer to be large, from the viewpoint that higher infrared reflectance can be obtained with a smaller number of layers. For at least one laminated body (unit) composed of a low refractive index layer and a high refractive index layer, the difference between the refractive indices of adjacent low refractive index layer and high refractive index layer is preferably 0.1 or more, more preferably 0.3 or more, even more preferably 0.35 or more, and particularly preferably more than 0.4. In a case in which the infrared reflecting layer has plural laminated bodies (units) of a high refractive index layer and a low refractive index layer, it is preferable that the difference in the refractive index between the high refractive index layer and the low refractive index layer in all of the laminated bodies (units) is in the suitable range described above. However, in regard to the outermost layer or the lowermost layer of the infrared reflecting layer, configurations other than the suitable range may also be employed. Also, the refractive index of the low refractive index layer is preferably 1.10 to 1.60, and more preferably 1.30 to 1.50. The refractive index of the high refractive index layer is preferably 1.80 to 2.50, and more preferably 1.90 to 2.20.

The reflectance in a particular wavelength region is determined by the difference between the refractive indices of adjacent two layers and the number of lamination, and as the difference in the refractive index is larger, the same reflectance is obtained with a smaller number of layers. This difference in the refractive index and the required number of layers can be calculated using a commercially available optical design software program. For example, in order to obtain an infrared reflectance of 90% or more, if the difference in the refractive index is smaller than 0.1, lamination of 200 or more layers is needed. Thus, not only productivity is lowered, but also scattering at the lamination interfaces is increased, transparency is decreased, and it becomes very difficult to produce the infrared shielding film without failure. From the viewpoint of enhancing the reflectance and reducing the number of layers, there is no upper limit on the difference in the refractive index, but the upper limit is substantially about 1.4.

Furthermore, regarding the optical characteristics of the infrared reflecting layer, the transmittance in the visible light region according to JIS R3106-1998 is preferably 50% or higher, more preferably 75% or higher, and even more preferably 85% or higher. Furthermore, it is preferable that the infrared reflecting layer has a region with a reflectance of 50% or higher in the wavelength range of 900 nm to 1400 nm.

The infrared reflecting layer may have a configuration of including at least one laminated body (unit) composed of a high refractive index layer and a low refractive index layer, on a substrate. From the viewpoint described above, a preferred number of layers of the high refractive index layer and the low refractive index layer is, in the range of the total number of layers, 100 layers or less, that is, 50 units or less, more preferably 40 layers (20 units) or less, and evenmore preferably 20 layers (10units) or less. Furthermore, the infrared reflecting layer may have a configuration of laminating at least one unit described above, and for example, the infrared reflecting layer may be a laminated film in which any one of the outermost layer and the lowermost layer of the laminated film is a high refractive index layer or a low refractive index layer. For the infrared shielding film of the present invention, preferred is a layer configuration in which the lowermost layer that is adjacent to the substrate is a low refractive index layer, and the outermost layer is also a low refractive index layer.

The thickness per layer of the low refractive index layer is preferably 20 to 800 nm, and more preferably 50 to 350 nm. On the other hand, the thickness per layer of the high refractive index is preferably 20 to 800 nm, and more preferably 50 to 350 nm.

Regarding the material that forms the infrared reflecting layer, conventionally known materials can be used, and examples thereof include metal oxide particles, polymers, and combinations thereof. From the viewpoint of the infrared reflecting characteristics, it is preferable that at least any one of the low refractive index layer and the high refractive index layer contains metal oxide particles, and it is more preferable that both contain metal oxide particles.

Examples of the metal oxide particles include, as examples of high refractivematerials, titanium dioxide (TiO₂), zirconium dioxide (ZrO₂), and tantalum pentoxide (Ta₂O₅) ; as examples of low refractive index materials, silicon dioxide (SiO₂) and magnesium fluoride (MgF₂) ; and as examples of medium refractive index materials, aluminum oxide (Al₂O₃). Films of these metal oxide particles can be produced by dry film forming methods such as a vapor deposition method and a sputtering method.

There are no particular limitations on the polymer contained in the infrared reflecting layer, and any polymer capable of forming an infrared reflecting layer can be used without any particular limitations.

For example, the polymers described in Japanese Translation of PCT Application (JP-T) No. 2002-509279 can be used as the polymer. Specific examples thereof include polyethylene naphthalate (PEN) and isomers thereof (for example, 2,6-, 1,4-, 1,5-, 2,7-, and 2,3-PEN), polyalkylene terephthalates (for example, polyethylene terephthalate (PET), polybutylene terephthalate, and poly-1,4-cyclohexanedimethylene terephthalate), polyimides (for example, polyacrylimide), polyether imide, atactic polystyrene, polycarbonate, polymethacrylates (for example, polyisobutyl methacrylate, polypropyl methacrylate, polyethyl methacrylate, and polymethyl methacrylate(PMMA)), polyacrylates (for example, polybutyl acrylate and polymethyl acrylate), cellulose derivatives (for example, ethyl cellulose, acetyl cellulose, cellulose propionate, acetyl cellulose butyrate, and cellulose nitrate), polyalkylene polymers (for example, polyethylene, polypropylene, polybutylene, polyisobutylene, and poly(4-methyl)pentene), fluorinated polymers (for example, a perfluoroalkoxy resin, polytetrafluoroethylene, fluorinated ethylene-propylene copolymers, polyvinylidene fluoride, and polychlorotrifluoroethylene), chlorinated polymers (for example, polyvinylidene chloride and polyvinyl chloride), polysulfone, polyether sulfone, polyacrylonitrile, polyamide, silicone resins, epoxy resins, polyvinyl acetate, polyether amide, ionomer resins, elastomers (for example, polybutadiene, polyisoprene, and neoprene), and polyurethane. Copolymers, for example, copolymers of PEN [for example, copolymers of (a) terephthalic acid or esters thereof, (b) isophthalic acid or esters thereof, (c) phthalic acid or an ester thereof, (d) an alkane glycol, (e) a cycloalkane glycol (for example, cyclohexanedimethanol diol), (f) an alkanedicarboxylic acid, and/or (g) a cycloalkanedicarboxylic acid (for example, cyclohexanedicarboxylic acid), with 2,6-, 1,4-, 1,5-, 2,7-, and/or 2, 3-naphthalenedicarboxylic acid or esters thereof], copolymers of polyalkylene terephthalates [for example, copolymers of (a) naphthalenedicarboxylic acid or esters thereof, (b) isophthalic acid or esters thereof, (c) phthalic acid or esters thereof, (d) an alkane glycol, (e) a cycloalkane glycol (for example, cyclohexanedimethanol diol), (f) an alkanedicarboxylic acid, and/or (g) a cycloalkanedicarboxylic acid (for example, cyclohexanedicarboxylic acid), with terephthalic acid or esters thereof], and styrene copolymers (for example, styrene-butadiene copolymers, and styrene-acrylonitrile copolymers), 4,4-bisbenzoic acid, and ethylene glycol, are also suitable. Furthermore, the respective layers may contain a blend of two or more kinds of the polymers or copolymers described above (for example, a blend of syndiotactic polystyrene (SPS) and atactic polystyrene).

The infrared reflecting layer can be formed by subjecting the polymer described above to melt extrusion and stretching of polymer as described in US Patent No. 6, 049, 491. According to the present invention, preferred combinations of the polymers that form the high refractive index layer and the low refractive index layer include PEN/PMMA, PEN/polyvinylidene fluoride, and PEN/PET.

Furthermore, the polymers described in JP-A No. 2010-184493 may also be used as the polymer. Specifically, a polyester (hereinafter, also referred to as polyester A) and a polyester containing residues derived from at least three kinds of diols such as ethylene glycol, spiroglycol and butylenes glycol (hereinafter, also referred to as polyester B) can be used. The polyester A is not particularly limited as long as the polymer has a structure obtainable by polycondensing a dicarboxylic acid component and a diol component, and examples thereof include polyethylene terephthalate, polypropylene terephthalate, polybutylene terephthalate, polyethylene-2,6-naphthalate, poly-1,4-cyclohexanedimethylene terephthalate, and polyethylene diphenylate. The polyester A may also be a copolymer. Here, a copolymerized polyester has a structure obtainable by polycondensation using at least three or more kinds in total of dicarboxylic acid components and diol components. Examples of the dicarboxylic acid components include terephthalic acid, isophthalic acid, phthalic acid, 1,4-naphthalenedicarboxylic acid, 1,5-naphthalenedicarboxylic acid, 2,6-naphthalenedicarboxylic acid, 4,4'-diphenyldicarboxylic acid, 4,4'-diphenylsulfonedicarboxylic acid, adipic acid, sebacic acid, dimeric acid, cyclohexanedicarboxylic acid and ester-forming derivatives thereof. Examples of the glycol component include ethylene glycol, 1,2-propanediol, 1,3-butanediol, 1,4-butanediol, 1,5-pentadiol, diethylene glycol, polyalkylene glycol, 2,2-bis(4'-β-hydroxyethoxyphenyl)propane, isosorbate, 1,4-cyclohexanedimethanol, spiroglycol, and ester-forming derivatives thereof. The polyester A is preferably polyethylene terephthalate or polyethylene naphthalate.

The polyester B contains residues derived from at least three kinds of diols such as ethylene glycol, spiroglycol and butylenes glycol. Typical examples thereof include a copolymerized polyester having a structure obtainable by performing copolymerization using ethylene glycol, spiroglycol and butylenes glycol, and a polyester obtainable by blending polyesters having structures that are obtained by performing polymerization using the relevant three kinds of diols. With this configuration, it is preferable because molding processing can be easily achieved, and delamination does not easily occur. Furthermore, it is preferable that the polyester B is a polyester containing residues derived from at least two kinds of dicarboxylic acids such as terephthalic acid/cyclohexanedicarboxylic acid. Such a polyester may be a copolyester obtained by copolymerizing terephthalic acid/cyclohexanedicarboxylic acid, or a blend of a polyester containing terephthalic acid residues and a polyester containing cyclohexanedicarboxylic acid residues. A polyester containing cyclohexanedicarboxylic acid residues is such that the difference between the in-plane average refractive index of the layer A and the in-plane average refractive index of the layer B becomes large, and thus an object having high reflectance is obtained. Furthermore, since the difference in the glass transition temperature between such a polyester and polyethylene terephthalate or polyethylene naphthalate is small, it is preferable because there is less chance of over-stretching occurring at the time of molding, and delamination does not easily occur.

In addition to that, it is also preferable to use a water-soluble polymer as the polymer. Since a water-soluble polymer does not use an organic solvent, there is less environmental burden; and since the water-soluble polymer is highly flexible, durability of the film at the time of bending is enhanced, which is preferable. Examples of the water-soluble polymer include polyvinyl alcohols; polyvinylpyrrolidones; acrylic resins such as polyacrylic acid, an acrylic acid-acrylonitrile copolymer, a potassium acrylate-acrylonitrile copolymer, a vinyl acetate-acrylic acid ester copolymer, and an acrylic acid-acrylic acid ester copolymer; styrene-acrylic acid resins such as a styrene-acrylic acid copolymer, a styrene-methacrylic acid copolymer, a styrene-methacrylic acid-acrylic acid ester copolymer, a styrene-α-methylstyrene-acrylic acid copolymer, and a styrene-α-methylstyrene-acrylic acid-acrylic acid ester copolymer; a styrene-sodium sytrenesulfonate copolymer, a styrene-2-hydroxyethyl acrylate copolymer, a styrene-2-hydroxyethylacrylate-potassiumstyrenesulfonate copolymer, a styrene-maleic acid copolymer, a styrene-maleic anhydride copolymer, a vinylnaphthalene-acrylic acid copolymer, a vinylnaphthalene-maleic acid copolymer; vinyl acetate-based copolymers such as a vinyl acetate-maleic acid ester copolymer, a vinyl acetate-crotonic acid copolymer, and a vinyl acetate-acrylic acid copolymer. Among these, particularly preferred examples include polyvinyl alcohol, polyvinylpyrrolidones, and copolymers containing these, from the viewpoints of handleability at the time of production and flexibility of the film, and most preferred is polyvinyl alcohol. These water-soluble polymers may be used singly, or two or more kinds may be used in combination.

Examples of polyvinyl alcohol that are preferably used in the present invention include conventional polyvinyl alcohol that is obtained by hydrolyzing polyvinyl acetate, as well as modified polyvinyl alcohols. Examples of the modified polyvinyl alcohols include cationically modified polyvinyl alcohol, anionically modified polyvinyl alcohol, nonionically modified polyvinyl alcohol, and vinyl alcohol-based polymers.

In regard to the polyvinyl alcohol obtained by hydrolyzing vinyl acetate, a polyvinyl alcohol having an average degree of polymerization of 800 or more is preferably used, and a polyvinyl alcohol having an average degree of polymerization of 1,000 to 5,000 is particularly preferably used. Furthermore, the degree of saponification is preferably 70% to 100% by mole, and particularly preferably 80% to 99.5% by mole.

An example of the cationically modified polyvinyl alcohol is a polyvinyl alcohol such as described in JP-A No. 61-10483, which has primary to tertiary amino groups or quaternary ammonium groups in the main chain or side chains of the polyvinyl alcohol, and this is obtained by saponifying a copolymer of an ethylenically unsaturated monomer having a cationic group and vinyl acetate.

Examples of the ethylenically unsaturated monomer having a cationic group include trimethyl-(2-acrylamido-2,2-dimethylethyl)ammonium chloride, trimethyl-(3-acrylamido-3,3-dimethylpropyl)ammonium chloride, N-vinylimidazole, N-vinyl-2-methylimidazole, N-(3-dimethylaminopropyl)methacrylamide, hydroxyethyltrimethylammonium chloride, trimethyl-(2-methacrylamidopropyl)ammonium chloride, and N-(1,1-dimethyl-3-dimethylaminopropyl)acrylamide. The proportion of a cationically modified group-containing monomer in the cationically modified polyvinyl alcohol is preferably 0.1% to 10% by mole, and more preferably 0.2% to 5% by mole, with respect to vinyl acetate.

Examples of the anionically modified polyvinyl alcohol include the polyvinyl alcohol having anionic groups as described in JP-A No. 1-206088; the copolymers of vinyl alcohol and vinyl compounds having water-soluble groups, as described in JP-ANo. 61-237681 and JP-A No. 63-307979; and the modified polyvinyl alcohols having water-soluble groups as described in JP-A No. 7-285265.

Furthermore, examples of the nonionically modified polyvinyl alcohol include a polyvinyl alcohol derivatives obtained by adding a polyalkylene oxide group to a portion of vinyl alcohol as described in JP-A No. 7-9758; a block copolymer of a vinyl compound having a hydrophobic group and vinyl alcohol as described in JP-A No. 8-25795; silanol-modified polyvinyl alcohol having silanol groups, and reactive group-modified polyvinyl alcohols having reactive groups such as acetoacetyl groups, carbonyl groups and carboxyl groups. Furthermore, examples of the vinyl alcohol-based polymers include EXCEVAL (registered trademark, manufactured by Kuraray Co., Ltd.), and NICHIGO G-POLYMER (trade name, manufactured by Nippon Synthetic Chemical Industry Co.,Ltd.). Regarding polyvinyl alcohol, two or more kinds having differences in the degree of polymerization or the kind of modification may be used in combination.

The weight average molecular weight of the water-soluble polymer is preferably 1,000 to 200,000, and more preferably 3,000 to 40,000. Meanwhile, in the present specification, regarding the weight average molecular weight, a value measured using gel permeation chromatography (GPC) under the measurement conditions indicated in the following Table 1 are employed.

**[Table 1]**

| |
|---|
| Solvent: 0.2 M NaNO₃, NaH₂PO₄, pH 7 |
| Column: Combination of Shodex Column OHPAK SB-802.5 HQ, 8 x 300 mm and Shodex Column OHPAK SB-805 HQ, 8 x 300 mm |
| Column temperature: 45°C |
| Sample concentration: 0.1 mass% |
| Detector: RID-10A (manufactured by Shimadzu Corp.) |
| Pump: LC-20AD (manufactured by Shimadzu Corp.) |
| Flow rate: 1 ml/min |
| Calibration curve: A calibration curve based on standard pullulan, Standard P-82 for Shodex Standard GFC (water-based GPC) column, is used. |

A curing agent may be used so as to cure the water-soluble polymer.

The curing agent is not particularly limited as long as the curing agent induces a curing reaction with a water-soluble polymer; however, in a case in which the water-soluble polymer is polyvinyl alcohol, boric acid and salts thereof are preferred. In addition to them, known curing agents can be used, and the curing agent is generally a compound having a group which is capable of reacting with a water-soluble polymer, or a compound that accelerates a reaction between the different groups carried by a water-soluble polymer. The curing agent is appropriately selected according to the kind of the water-soluble polymer and used. Specific examples other than boric acid and salts as the curing agent include, for example, epoxy-based curing agents (diglycidyl ethyl ether, ethylene glycol diglycidyl ether, 1,4-butanediol diglycidyl ether, 1,6-diglycidyl cyclohexane, N,N-diglycidyl-4-glycidyloxyaniline,sorbitolpolyglycidyl ether, glycerol polyglycidyl ether, and the like), aldehyde-based curing agents (formaldehyde, glyoxal, and the like), active halogen-based curing agents (2,4-dichloro-4-hydroy-1,3,5-s-triazine and the like), active vinyl-based compounds (1,3,5-trisacryloylhexahydro-s-triazine, bisvinylsulfonyl methyl ether, and the like), and aluminum alum.

In a case in which the water-soluble polymer is gelatin, examples include organic hardening agents such as a vinylsulfone compound, a urea-formalin condensate, a melanin-formalin condensate, an epoxy-based compound, an aziridine-based compound, an active olefin, and an isocyanate-based compound; and inorganic polyvalent metal salts of chromium, aluminum, zirconium, and the like.

Meanwhile, the form of the copolymer in a case in which the polymer is a copolymer may be any of a block copolymer, a random copolymer, a graft copolymer, or an alternating copolymer.

In regard to a suitable embodiment of the infrared reflecting layer, it is preferable to use a polymer since large-sized screens can be produced, the infrared reflecting layer is inexpensive in terms of cost, and durability of the film at the time of bending or under high temperature and high humidity conditions is enhanced. In addition to the embodiment in which the infrared reflecting layer is composed only of a polymer, an embodiment in which the infrared reflecting layer contains a polymer and metal oxide particles is more preferred.

The embodiment of containing metal oxide particles in addition to the polymer is explained. When the infrared reflecting layer contains metal oxide particles, the difference in the refractive index between the various refractive index layers can be made larger, and since the number of laminated layers is reduced, transparency of the film can be increased, which is preferable. Furthermore, there is an advantage that stress relaxation works, and the film properties (bendability at the time of bending and under high temperature and high humidity conditions) are enhanced. The metal oxide particles may be incorporated into any one of the films that constitute the infrared reflecting layer (at least one of the low refractive index layer and the high refractive index layer contains metal oxide particles). However, a suitable embodiment is an embodiment in which at least the high refractive index layer contains metal oxide particles, while a more preferred embodiment is an embodiment in which both the high refractive index layer and the lower refractive index layer contain metal oxide particles.

Examples of the metal oxide particles include particles of titanium dioxide, zirconium dioxide, tantalum pentoxide, zinc oxide, silicon dioxide (synthetic non-crystalline silica, colloidal silica, and the like), alumina, colloidal alumina, lead titanate, red lead, yellow lead, zinc yellow, chromium oxide, ferric oxide, iron black, copper oxide, magnesium oxide, magnesium hydroxide, magnesium fluoride, strontium titanate, yttrium oxide, niobium oxide, europium oxide, lanthanum oxide, zirconia, and tin oxide.

The average particle size of the metal oxide particles is preferably 100 nm or less, more preferably 4 to 50 nm, and even more preferably 5 to 40 nm. The average particle size of the metal oxide particles is determined by observing the particles themselves or the particles appearing in a cross-section or the surface of a layer by electron microscopy, measuring the particle sizes of any arbitrary 1,000 particles, and calculating the simple mean value thereof (number average). Here, the particle sizes of the individual particles are represented by the diameter when a circle having an equivalent projected area is assumed.

The content of the metal oxide particles in each of the refractive index layers is preferably 20% to 90% by weight, and more preferably 40% to 75% by weight, relative to the total weight of the refractive index layer.

Regarding the metal oxide particles, it is preferable to use solid fine particles selected from titanium dioxide, silicon dioxide and alumina.

For the low refractive index layer, it is preferable to use silicon dioxide (silica) as the metal oxide particles, and it is more preferable to use acidic colloidal silica sol.

### [Silicon dioxide]

Regarding the silicon dioxide (silica) that can be used in the present invention, silica that has been synthesized by a conventional wet method, colloidal silica, or silica that has been synthesized by a gas phase method may be preferably used. According to the present invention, examples of microparticulate silica that is particularly preferably used include colloidal silica, and microparticulate silica that has been synthesized by a gas phase method.

The metal oxide particles are preferably in a state in which the microparticle dispersion liquid before being mixed with a cationic polymer is dispersed to the level of primary particles.

For example, in the case of the gas phase method microparticulate silica described above, the average particle size of the primary particles of the metal oxide fine particles dispersed in the state of primary particles (particle size in the state of dispersion liquid before application) is preferably 100 nm or less, more preferably 4 to 50 nm, and even more preferably 4 to 20 nm.

Regarding the silica having an average particle size of the primary particles of 4 to 20 nm and synthesized by a gas phase method, which is more preferably used, for example, AEROSIL manufactured by Nippon Aerosil Co., Ltd. is commercially available. This gas phase method microparticulate silica can be dispersed in water relatively easily to the level of primary particles, by easily suctioning and dispersing the microparticulate silica using, for example, a jet stream inductor mixer manufactured by Mitamura Riken Kogyo, Inc.

Examples of the gas phasemethod silica that are currently commercially available include various AEROSIL products of Nippon Aerosil Co, Ltd.

The colloidal silica that is preferably used in the present invention is obtained by heating and aging a silica sol that is obtained by metathesis of sodium silicate by acid or the like, or bypassing sodium silica through an ion-exchange resin layer. Examples thereof include those described in JAP-A No. 57-14091, JP-A No. 60-219083, JP-A No. 60-219084, JP-A No. 61-20792, JP-A No. 61-188183, JP-A No. 63-17807, JP-A No. 4-93284, JP-A No. 5-278324, JP-A No. 6-92011, JP-A No. 6-183134, JP-A No. 6-297830, JP-A No. 7-81214, JP-A No. 7-101142, JP-A No. 7-179029, JP-A No. 7-137431, and WO 94/26530.

For such colloidal silica, a synthetic product may be used, or a commercially available product may be used. Examples of the commercially available product include SNOWTEX series (SNOWTEX OS, OXS, S, OS, 20, 30, 40, O, N, C and the like) marketed from Nissan Chemical Industries, Ltd.

A preferred average particle size of the colloidal silica is usually 5 to 100 nm, but an average particle size of 7 to 30 nm is more preferred.

The silica synthesized by a gas phase method and the colloidal silica may have the surfaces cationically modified, or may be treated with Al, Ca, Mg, Ba, and the like.

For the metal oxide particles contained in the high refractive index layer, TiO₂, ZnO, and ZrO₂ are preferred, and from the viewpoint of the stability of the metal oxide particle-containing composition described below for forming a high refractive index layer, TiO₂ (titanium dioxide sol) is more preferred. Furthermore, even among TiO₂'s, particularly rutile type is preferred to anatase type because since rutile type has lower catalytic activity, weather resistance of the high refractive index layer or an adjacent layer is increased, and the refractive index is further increased.

### (Titanium dioxide)

### Method for producing titanium dioxide sol

A first step in the method for producing rutile type microparticulate titanium dioxide is a step of treating titanium dioxide hydrate with at least one basic compound selected from the group consisting of hydroxides of alkali metals and hydroxides of alkaline earth metals (step (1)).

Titanium dioxide hydrate can be obtained by hydrolysis of a water-soluble titanium compound such as titanium sulfate or titanium chloride. The method for hydrolysis is not particularly limited, and knownmethods can be applied. Among them, titanium dioxide hydrate obtained by thermal hydrolysis of titanium sulfate is preferred.

The step (1) can be carried out by, for example, adding the basic compound to an aqueous suspension of the titanium dioxide hydrate, and treating (inducing a reaction) the mixture for a predetermined time under the conditions of a predetermined temperature.

The method for producing an aqueous suspension from the titanium dioxide hydrate is not particularly limited, and can be carried out by adding the titanium dioxide hydrate to water and stirring the mixture. The concentration of the suspension is not particularly limited, but for example, the concentration is preferably such that the TiO₂ concentration in the suspension is 30 to 150 g/L. When the concentration is adjusted to the above range, the reaction (treatment) can be carried out efficiently.

The at least one basic compound selected from the group consisting of hydroxides of alkali metals and hydroxides of alkaline earth metals used in the above step (1) is not particularly limited, and examples thereof include sodium hydroxide, potassium hydroxide, magnesium hydroxide, and calcium hydroxide. The amount of addition of the basic compound for the step (1) is preferably 30 to 300 g/L as the concentration of the basic compound in the reaction (treatment) suspension.

It is preferable to carry out the step (1) at a reaction (treatment) temperature of 60°C to 120°C. The reaction (treatment) time may vary with the reaction (treatment) temperature, but is preferably 2 to 10 hours. The reaction (treatment) is preferably carried out by adding an aqueous solution of sodium hydroxide, potassium hydroxide, magnesium hydroxide, or calcium hydroxide to a suspension of titanium dioxide hydrate. After the reaction (treatment), the reaction (treatment) mixture is cooled, optionally neutralized with an inorganic acid such as hydrochloric acid, subsequently filtered and washed with water, and thereby titanium dioxide hydrate microparticles can be obtained.

Furthermore, as a second step (step (2)), the compound obtained by the above step (1) may be treated with a carboxyl group-containing compound and an inorganic acid. The method for treating the compound obtained by the above step (1) with an inorganic acid in the production of rutile type titanium dioxide microparticles is a known method; and, the particle size can be adjusted by using a carboxyl group-containing compound in addition to the inorganic acid.

The carboxyl group-containing compound is an organic compound having a -COOH group. The carboxyl group-containing compound is preferably a polycarboxylic acid having 2 or more carboxyl groups, and more preferably from 2 to 4 carboxyl groups. It is speculated that since the polycarboxylic acid has a coordinating ability to metal atoms, aggregation between fine particles is suppressed by coordination, and thereby rutile type titanium dioxide microparticles can be suitably obtained.

The carboxyl group-containing compound is not particularly limited, and examples thereof include dicarboxylic acids such as oxalic acid, malonic acid, succinic acid, glutaric acid, adipic acid, propylmalonic acid, and maleic acid; polyvalent hydroxycarboxylic acids such as malic acid, tartaric acid, and citric acid; aromatic polycarboxylic acids such as phthalic acid, isophthalic acid, hemimellitic acid, and trimellitic acid; and ethylenediamine tetraacetate. Among these, two or more kinds of compounds may be used simultaneously in combination.

The entirety or a portion of the carboxyl group-containing compound may also be a neutralization product of an organic compound having a -COOH group (for example, an organic compound having a -COONa group or the like).

The inorganic acid is not particularly limited, and examples thereof include hydrochloric acid, sulfuric acid, and nitric acid. The inorganic acid may be added such that the concentration in the liquid for reaction (treatment) is 0.5 to 2.5 mol/L, and more preferably 0.8 to 1.4 mol/L.

The step (2) is preferably carried out by suspending the compound obtained by the above step (1) in pure water, stirring, and optionally heating the suspension. The addition of the carboxyl group-containing compound and the inorganic acid may be carried out simultaneously or sequentially; however, it is preferable to add the compounds sequentially. The addition may be such that the inorganic acidmaybe added after the carboxyl group-containing compound is added, or the carboxyl group-containing compound may be added after the inorganic acid is added.

For example, a method of adding a carboxyl group-containing compound into a suspension of the compound obtained by the step (1), initiating heating, adding an inorganic acid when the liquid temperature reaches preferably 60°C or higher, and more preferably 90°C or higher, stirring the mixture preferably for 15 minutes to 5 hours, and more preferably 2 to 3 hours while maintaining the liquid temperature (method 1) ; and a method of heating a suspension of the compound obtained by the step (1), adding an inorganic acid when the liquid temperature reaches preferably 60°C or higher, and more preferably 90°C or higher, adding a carboxyl group-containing compound after 10 to 15 minutes from the addition of the inorganic acid, and stirring the mixture preferably for 15 minutes to 5 hours, and more preferably 2 to 3 hours, while maintaining the liquid temperature (method 2) may be used. When these methods are carried out, suitable microparticulate rutile type titanium dioxide can be obtained.

When the step (2) is carried out by the method 1, the carboxyl group-containing compound is preferably used at a proportion of 0.25% to 1.5% by mole, and more preferably at a proportion of 0.4% to 0.8% by mole, relative to 100% by mole of TiO₂. When the amount of addition of the carboxyl group-containing compound is in the range described above, particles having an intended particle size are obtained, and rutilization of the particles proceeds more efficiently.

When the step (2) is carried out by the method 2, the carboxyl group-containing compound is preferably at a proportion of 1.6% to 4.0% by mole, and more preferably at a proportion of 2.0% to 2.4% by mole, relative to 100% by mole of TiO₂.

When the amount of addition of the carboxyl group-containing compound is in the range described above, particles having an intended particle size are obtained, rutilization of the particles proceeds more efficiently, and it is also economically advantageous. Furthermore, the addition of the carboxyl group-containing compound is carried out after 10 to 15 minutes from the addition of the inorganic acid, rutilization of the particles proceeds efficiently, and particles having an intended particle size are obtained.

In regard to the step (2), it is preferable to perform cooling after completion of the reaction (treatment), and to perform neutralization to reach pH 5.0 to pH 10.0. The neutralization can be carried out by an alkaline compound such as an aqueous solution of sodium hydroxide, ammonia water. After the neutralization, filtration and washing with water are carried out, and thereby intended rutile type titanium dioxide microparticles can be separated.

Furthermore, as the method for producing titanium dioxide microparticles, the known method described in "Titanium Oxide - Properties and Application Technologies" (Kiyono Manabu, pp. 255-258 (2000)) Gihodo Shuppan Co., Ltd.) and the like can be used.

Furthermore, regarding another production method for metal oxide particles including titanium dioxide particles, reference can be made to the matters described in JP-A No. 2000-053421 (a titanium dioxide sol formed by incorporating an alkyl silicate as a dispersion stabilizer, in which the weight ratio of the amount of silicon in the alkyl silicate calculated in terms of SiO₂ and the amount of titanium in titanium dioxide calculated in terms of TiO₂ (SiO₂/TiO₂) is 0.7 to 10), JP-A No. 2000-063119 (a sol having composite colloidal particles of TiO₂-ZrO₂-SnO₂ as nuclei, and having the surfaces coated with composite oxide colloidal particles of WO₃-SnO₂-SiO₂), and the like.

Furthermore, the titanium dioxide particles may also be coated with a silicon-containing hydrated oxide. The amount of coating of the silicon-containing hydrated compound is preferably 3% to 30% by weight, more preferably 3% to 10% by weight, and even more preferably 3% to 8% by weight. It is because when the amount of coating is 30% by weight or less, a desired refractive index of the high refractive index layer is obtained, and when the amount of coating is 3% by more, the particles can be stably formed.

Regarding the method of coating titanium dioxide particles with a silicon-containing hydrated oxide, the coated particles can be produced by conventionally known methods, and reference can be made to the matters described in, for example, JP-A No. 10-158015 (Si/Al hydrated oxide treatment on rutile type titanium dioxide; a method for producing a titanium dioxide sol by peptizing a titanate cake in an alkali region, subsequently precipitating hydrated oxides of silicon and/or aluminum on the surface of titanium oxide, and surface treating the hydrated oxide), JP-A No. 2000-204301 (a sol obtained by coating rutile type titanium dioxide with a composite oxide of Si and oxides of Zr and/or Al, hydrothermal treatment), JP-A No. 2007-246351 (a method of adding an organoalkoxysilane represented by formula: R1ₙSiX₄₋ₙ (wherein R1 represents a C1-C8 alkyl group, a glycidyloxy-substituted C1-C8 alkyl group, or a C2-C8 alkenyl group; X represents an alkoxy group; and n represents 1 or 2), or a compound having a complexing action against titanium dioxide as a stabilizer, to a hydrosol of titanium oxide obtainable by peptization of hydrated titanium dioxide, adding the hydrosol into a solution of sodium silicate or silica sol in an alkali region, adjusting the pH, aging the mixture, and thereby producing a titanium dioxide hydrosol coated with a hydrated oxide of silicon), and the like.

The volume average particle size of the titanium dioxide particles is preferably 30 nm or less, more preferably 1 to 30 nm, and even more preferably 5 to 15 nm. When the volume average particle size is 30 nm or less, it is preferable from the viewpoint of having low haze and excellent visible light transmissivity.

The volume average particle size as used herein is the volume average particle size of primary particles or secondary particles dispersed in a medium, and can be measured by a laser diffraction/scattering method, a dynamic light scattering method, or the like.

Specifically, the particles themselves or the particles appearing in a cross-section or the surface of the refractive index layer are observed by electron microscopy, and the particle sizes of any arbitrary 1000 particles are measured. In a population of metal oxide particles in which particles having particle sizes of d1, d2, ..., di, ..., and dk, respectively, exist in the numbers of n1, n2, ..., ni, ... and nk, respectively, when the volume per particle is designated as vi, the volume-weighted average particle size represented by average particle size mv = {∑(vi·di)} / {∑(vi)} is calculated.

Furthermore, according to the present invention, a colloidal silica composite emulsion can also be used as a metal oxide for the low refractive index layer. Since the colloidal silica composite emulsion that is preferably used in the present invention is such that the core of the particles is formed from a polymer or a copolymer and the like as main components, and can be obtained by polymerizing a monomer having an ethylenically unsaturated bond by a conventionally known emulsion polymerization method in the presence of the colloidal silica described in JP-A No. 59-71316 or JP-A No. 60-127371. The particle size of the colloidal silica applied to the composite emulsion is preferably less than 40 nm.

An example of the colloidal silica that is used in the preparation of this composite emulsion is a colloidal silica having primary particles having a size of usually 2 to 100 nm. Examples of the ethylenic monomer include materials that are well known in latex industry, such as a (meth)acrylic acid ester having an alkyl group having 1 to 18 carbon atoms, an aryl group or an allyl group, styrene, α-methyl styrene, vinyltoluene, acrylonitrile, vinyl chloride, vinylidene chloride, vinyl acetate, vinyl propionate, acrylamide, N-methylolacrylamide, ethylene, and butadiene. If necessary, in order to further increase compatibility with colloidal silica, vinylsilanes such as vinyltrimethoxysilane, vinyltriethoxysilane, and γ-methacryloxypropyltrimethoxysilane; and for dispersion stability of the emulsion, anionic monomers such as (meth)acrylic acid, maleic acid, maleic anhydride, fumaric acid, and crotonic acid are used for the aids. Meanwhile, the ethylenic monomers can be used in combination of two or more kinds as necessary.

Furthermore, the ratio of the ethylenic monomer/colloidal silica in emulsion polymerization is preferably 100/1 to 200 as the solid content ratio.

Among the colloidal silica composite emulsions used in the present invention, more preferred examples include colloidal silica composite emulsions having a glass transition point in the range of -30°C to 30°C.

Furthermore, preferred examples in terms of composition include ethylenic monomers such as acrylic acid esters and methacrylic acid esters, and particularly preferred examples include a copolymer of a (meth) acrylic acid ester and styrene, a copolymer of a (meth)acrylic acid alkyl ester and a (meth)acrylic acid aralkyl ester, and a copolymer of a (meth) acrylic acid alkyl ester and a (meth) acrylic acid aryl ester.

Examples of the emulsifier that are used in emulsion polymerization include an alkylallyl polyether sulfonic acid sodium salt, a laurylsulfonic acid sodium salt, an alkylbenzenesulfonic acid sodium salt, a polyoxyethylene nonyl phenyl ether nitric acid sodium salt, an alkylallyl sulfosuccinate sodium salt, and a sulfopropylmaleic acid monoalkyl ester sodium salt.

### (Other additives)

In each of the refractive index layers that form the infrared reflecting layer, various additives can be incorporated as necessary.

Specifically, various known additives including various anionic, cationic or nonionic surfactants; dispersants such as polycarboxylic acid ammonium salts, allyl ether copolymers, benzenesulfonic acid sodium salt, graft compound-based dispersants, and polyethylene glycol type nonionic surfactants; organic acid salts such as acetic acid salts, propionic acid salts, and citric acid salts; plasticizers, such as organic ester plasticizers such as monobasic organic acid esters and polybasic organic acid esters, and phosphoric acid plasticizers such as organic phosphoric acid plasticizers and organic phosphorous acid plasticizers; ultraviolet absorbers described in JP-A No. 57-74193, JP-A No. 57-87988, and JP-A No. 62-261476; discoloration inhibitors described in JP-A No. 57-74192, JP-A No. 57-87989, JP-A No. 60-72785, JP-A No. 61-146591, JP-A No. 1-95091 and JP-A No. 3-13376; fluorescent whitening agents described in JP-A No. 59-42993, JP-A No. 59-52689, JP-A No. 62-280069, JP-ANo. 61-242871, and JP-ANo. 4-219266; pH adjusting agents such as sulfuric acid, phosphoric acid, acetic acid, citric acid, sodium hydroxide, potassium hydroxide, and potassium carbonate; defoamants; lubricants such as diethylene glycol; antiseptic agents; antistatic agents; and mattifying agents, may be incorporated.

### (Method for producing infrared reflecting layer)

The infrared reflecting layer is configured by laminating units each composed of a high refractive index layer and a low refractive index layer on a substrate. Specifically, similarly to the method described in US Patent No. 6,049,419, a method of forming an infrared reflecting layer by melt extrusion and stretching of a polymer; and a method of forming a laminated body by alternately wet applying a water-based coating liquid for a high refractive index layer and a coating liquid for a low refractive index layer, drying the coating liquids, may be used.

Regarding the method of alternately wet applying a water-based coating liquid for a high refractive index layer and a coating liquid for a low refractive index layer, the coating methods listed below are preferably used. For example, a roll coating method, a rod bar coating method, an air knife coating method, a spray coating method, a curtain coating method, the slide hopper coating method described in US Patent No. 2,761,419, US Patent No. 2,761,791, and the like, and an extrusion coating method are preferably used. Furthermore, the method for multilayer coating of plural layers may be sequential multilayer coating, or may be simultaneous multilayer coating.

Regarding the viscosity of the coating liquid for a high refractive index layer and a coating liquid for a low refractive index layer at the time of performing simultaneous multilayer coating, in the case of using a slide hopper coating method, the viscosity is preferably in the range of 5 to 100 mPa·s, and more preferably in the range of 10 to 50 mPa·s. Furthermore, in the case of using a curtain coating method, the viscosity is preferably in the range of 5 to 1200 mPa·s, and more preferably in the range of 25 to 500 mPa·s.

Furthermore, the viscosity at 15°C of the coating liquid is preferably 100 mPa·s or more, more preferably 100 to 30, 000 mPa·s, even more preferably 3,000 to 30,000 mPa·s, and most preferably 10,000 to 30,000 mPa·s.

Regarding the method of coating and drying, it is preferable to warm a water-based coating liquid for a high refractive index layer and a water-based coating liquid for a low refractive index layer to 30°C or higher, conducting application of the coating liquids, subsequently cooling the temperature of the coating films thus formed first to 1°C to 15°C, and drying the coating films at 10°C or higher. More preferably, the method of coating and drying is carried out under the drying conditions of a wet bulb temperature of 5°c to 50°C, and a film surface temperature in the range of 10°C to 50°C. Furthermore, regarding the method of cooling immediately after application, it is preferable to carry out the cooling by a horizontal set method from the viewpoint of the uniformity of the coating film thus formed.

In regard to the coating thickness of the coating liquid for a high refractive index layer and the coating liquid for a low refractive index layer, it is desirable to apply the coating liquids to obtain the preferred thickness at the time of drying as described above.

### [Other functional layers]

The infrared shielding film of the present invention may have one or more of functional layers such as a conductive layer, an antistatic layer, a gas barrier layer, an easily adhesive layer (adhesive layer), an antifouling layer, a deodorant layer, a dripping layer, an easily lubricating layer, an abrasion resistant layer, an antireflection layer, an electromagnetic wave shielding layer, an ultraviolet absorbing layer, an infrared absorbing layer, a printed layer, a fluorescence emitting layer, a hologram layer, a peelable layer, a tacky adhesive layer, an adhesive layer, an infrared cutting layer other than the high refractive index layer and the low refractive index layer of the present invention (metal layer or liquid crystal layer), a colored layer (visible light absorbing layer), and an intermediate film layer used for reinforced glass. Hereinbelow, a tacky adhesive layer, which is a preferred functional layer, is explained.

### <Tacky adhesive layer>

The tackifier that constitutes the tacky adhesive layer is not particularly limited, and examples thereof include an acrylic tackifier, a silicone-based tackifier, a urethane-based tackifier, a polyvinyl butyral-based tackifier, and an ethylene-vinyl acetate-based tackifier.

For the infrared shielding film of the present invention, in the case of pasting the film to a window glass, a method of sticking the tacky adhesive layer of the infrared shielding film of the present invention to the glass surface of a window that has been wetted by spraying water thereon, a so-called water pasting method, is suitably used from the viewpoints of reattachment, positional correction and the like. Therefore, an acrylic tackifier that has weak tackifying power under a wetted condition with the presence of water is preferably used.

The acrylic tackifier to be used may be any of a solvent-based tackifier or an emulsion-based tackifier; however, from the viewpoint the tackifying power or the like can be easily increased, a solvent-based tackifier is preferred, and among others, a solvent-based tackifier that is obtainable by solution polymerization is preferred. Examples of the raw material in the case of producing such a solvent-based acrylic tackifier by solution polymerization include, as a main monomer that constitutes the skeleton, acrylic acid esters such as ethyl acrylate, butyl acrylate, 2-ethylhexyl acrylate, and ocryl acrylate; as a comonomer for increasing the cohesive power, vinyl acetate, acrylonitrile, styrene, and methyl methacrylate; and as functional group-containing monomer for accelerating crosslinking, imparting stable tackifying power, and maintaining tackifying power to a certain extent even in the presence of water, methacrylic acid, acrylic acid, itaconic acid, hydroxyethyl methacrylate, and glycidyl methacrylate. In the tacky adhesive layer of the laminated film, since particularly high tackiness is required, a main polymer having a low glass transition temperature (Tg), such as butyl acrylate, is particularly useful.

In this tacky adhesive layer, for example, a stabilizer, a surfactant, an ultraviolet absorber, a flame retardant, an antistatic agent, an oxidation inhibitor, a thermal stabilizer, a lubricating agent, a filler, a colorant, and an adhesiveness adjusting agent can be incorporated as additives. Particularly, in the case of using the infrared shielding film for window pasting as in the case of the present invention, the addition of an ultraviolet absorber is effective, also for suppressing deterioration of the infrared shielding film caused by ultraviolet radiation.

The thickness of the tacky adhesive layer is preferably 1 µm to 100 µm, and more preferably 3 µm to 50 µm. When the thickness is 1 µm or more, tackiness tends to increase, and sufficient tackifying power is obtained. On the contrary, when the thickness is 100 µm or less, not only transparency of the infrared shielding film is enhanced, but also when the infrared shielding film is pasted to a window glass and then peeled off, there is a tendency that cohesive failure between tacky adhesive layers does not occur, and the tackifier residue on the glass surface is removed.

### [Infrared shielding body]

The infrared shielding film of the present invention can be applied to a wide variety of fields. For example, the infrared shielding film is used mainly for the purpose of increasing weather resistance, as a film for window pasting such as a heat ray reflecting film that is pasted to the facilities that are exposed to sunlight for a long time, such as outdoor windows of a building and vehicle windows, and imparts a heat ray reflecting effect; or as a film for agricultural plastic greenhouses. Furthermore,theinfrared shielding film is also suitably used as an infrared shielding film for automobiles, which is sandwiched between a glass plate and a glass plate, such as a reinforced glass for automobiles. In this case, since the infrared shielding film can be sealed from the outside gases, it is preferable from the viewpoint of durability.

Particularly, the infrared shielding film according to the present invention is suitably used in a member that is pasted to a base made of glass or a resin as a substitute for glass, directly or through an adhesive.

Preferred examples of the base include a plastic base, a metal base, a ceramic base, and a cloth-like base, and the infrared shielding film of the present invention can be provided on bases of various forms such as a film form, a plate film, a spherical form, a cubic form, and a cuboid form. Among these, a plate-shaped ceramic base is preferred, and an infrared shielding body having the infrared shielding film provided on a glass plate is more preferred. Examples of the glass plate include, for example, the float plate glass described in JIS R3202:1996, and a polished plate glass. The thickness of the glass plate is preferably 0.01 to 20 mm.

Regarding the method of providing the infrared shielding film of the present invention on a base, a method of providing a tacky adhesive layer by coating on the infrared shielding film as described above, and pasting the infrared shielding film to the base by means of the tacky adhesive layer, is suitably used. Regarding the pasting method, dry pasting by which the film is pasted directly on the base, or a method of pasting with water as described above, can be applied. It is more preferable to paste the infrared shielding film by a water pasting method so that air does not enter between the base and the infrared shielding film, and from the viewpoint of the ease of installation such as the determination of position of the infrared shielding film on the base.

The infrared shielding body is in the form of having the infrared shielding film of the present invention provided on at least one surface of the base; however, an embodiment in which the infrared reflecting film is provided on plural surfaces of the base, or an embodiment of having plural bases installed on the infrared shielding film of the present invention may also be used. For example, an embodiment in which the infrared reflecting film of the present invention is provided on both surfaces of the glass plate described above, or an embodiment in the form of reinforced glass, in which tacky adhesive layers are provided by coating on both surfaces of the infrared reflecting film of the present invention, and the glass plates described above are laminated on both surfaces of the infrared reflecting film, may also be used.

### EXAMPLES

Hereinafter, the present invention will be described specifically by way of Examples, but the present invention is not intended to be limited to these. Meanwhile, in regard to the Examples, indications of "parts" and "percent (%)" are used, but unless particularly stated otherwise, the unit indicates "parts by weight".

### <Production of infrared shielding film>

### (Preparation of coating liquid for low refractive index layer L1)

430 Parts of a 10 wt% aqueous solution of colloidal silica (SNOWTEX OXS, manufactured by Nissan Chemical Industries, Ltd.), 150 parts of a 3 wt% aqueous solution of boric acid, 85 parts of water, 300 parts of a 4 wt% aqueous solution of polyvinyl alcohol (JP-45, manufactured by Japan Vam & Poval Co., Ltd., degree of polymerization 4500, degree of saponification 88 mol%), and 3 parts of a 5 wt% aqueous solution of a surfactant (SOFTAZOLINE LSB-R, manufactured by Kawaken Fine Chemicals Co., Ltd.) were introduced in order at 45°C, the mixture was made up to 1000 parts with pure water. Thus, a coating liquid for a low refractive index layer L1 was prepared.

### (Preparation of coating liquid for high refractive index layer H1)

30 L of an aqueous solution of sodium hydroxide (concentration 10 mol/L) was added with stirring to 10 L (liters) of an aqueous suspension obtained by suspending titaniumdioxide hydrate inwater (TiO₂ concentration 100 g/L), the temperature was increased to 90°C, and the mixture was aged for 5 hours. Subsequently, the mixture was neutralized with hydrochloric acid, filtered, and washed with water. Meanwhile, for the reaction (treatment) described above, a titanium dioxide hydrate obtained by thermally hydrolyzing an aqueous solution of titanium sulfate according to a known technique was used as the titanium dioxide hydrate.

The base-treated titanium compound was suspended in pure water to obtain a TiO₂ concentration of 20 g/L, and citric acid was added thereto with stirring at a proportion of 0.4% bymole relative to the amount of TiO₂. The mixture was heated. When the liquid temperature reached 95°C, concentrated hydrochloric acid was added thereto to obtain a hydrochloric acid concentration of 30 g/L, and the mixture was stirred for 3 hours while the liquid temperature was maintained.

The pH and the zeta-potential of the water-based dispersion liquid of titanium oxide sol thus obtained were measured, and the pH was 1.4, while the zeta-potential was +40 mV. Furthermore, a particle size analysis was carried out using a ZETASIZER NANO manufactured by Malvern Instruments, Ltd., and the volume average particle size was 35 nm, while the monodispersity was 16%.

1 kg of pure water was added to 1 kg of the 20.0 wt% water-based dispersion liquid of titanium oxide sol containing rutile type titanium oxide particles having a volume average particle size of 35 nm.

2 kg of pure water was added to 0.5 kg of the 10.0 wt% water-based dispersion liquid of titanium oxide sol, and then the mixture was heated to 90°C. Thereafter, 1.3 kg of an aqueous solution of silicic acid having a SiO₂ concentration of 2.0% by weight was slowly added, and then the dispersion liquid thus obtained was subjected to a heating treatment in an autoclave at 175°C for 18 hours. The dispersion liquid was further concentrated, and thus a 20 wt% aqueous sol dispersion liquid of silica-modified titanium oxide particles containing titanium oxide having a rutile type structure and having a coating layer of SiO₂ was obtained.

Subsequently, 320 parts of a 20.0 wt% aqueous sol dispersion liquid of silica-modified titanium oxide particles, 120 parts of a 1.92 wt% aqueous solution of citric acid, 20 parts of a 10 wt% polyvinyl alcohol solution (PVA 103, degree of polymerization 300, degree of saponification 99% by mole, manufactured by Kuraray Co., Ltd.), 100 parts of a 3 wt% aqueous solution of boric acid, 350 parts of a 4 wt% solution of polyvinyl alcohol (manufactured by Kuraray Co., Ltd., PVA-124, degree of polymerization 2400, degree of saponification 88 mol%), and 1 part of a 5 wt% solution of surfactant (SOFTAZOLINE LSB-R, manufactured by Kawaken Fine Chemical Co., Ltd.) were introduced in order at 45°C, and the mixture was made up to 1000 parts with pure water. Thus, a coating liquid for a high refractive index layer H1 was prepared.

### (Production of hard coating liquid 1)

An AZO dispersion liquid (product name: CELNAX CX-Z610M-F2, average particle size 15 nm, manufactured by Nissan Chemical Industries, Ltd.) was diluted with methanol to obtain an AZO concentration of 40% by weight, and an ultraviolet-curable hard coating agent, KRM8495 (manufactured by Daicel-Cytec Co., Ltd., mixture of an acrylate-based cured resin and a polymerization initiator), was added thereto. A mixture having a total solid content of 30% by weight, an AZO concentration of 50% by weight relative to the solid content, and a proportion of the cured resin and the polymerization initiator of 50% by weight relative to the solid content, was prepared, and thereby a hard coating liquid 1 was produced.

### (Production of hard coating liquid 2)

An ultraviolet-curable hard coating, KRM8495 (manufactured by Daicel-Cytec Co., Ltd.), was added to a GZO dispersion liquid (product name: PAZET GK-40, primary particle size 20 to 40 nm, manufactured by Hakusui Tech Co., Ltd.), and a mixture having a total solid content of 25% by weight and a GZO concentration of 70% by weight relative to the solid content was prepared. Thereby, a hard coating liquid 2 was produced.

### (Production of hard coating liquid 3)

A dispersion liquid of LaB₆ and ZrO₂ (product name: KHF-8AHP, manufactured by Sumitomo Metal Industries, Ltd., the particle sizes of LaB₆ and ZrO₂ are in the range of 1 to 100 nm) and an AZO dispersion liquid (product name: CELNAX CX-Z610M-F2, average particle size 15 nm, manufactured by Nissan Chemical Industries, Ltd.) were mixed at a ratio of LaB₆ and ZrO₂:AZO (weight ratio) = 1:2, and an ultraviolet-curable hard coating agent, KRM8495 (manufactured by Daicel-Cytec Co., Ltd.), was added thereto. A mixture having a total solid content of 30% by weight, an AZO, LaB₆ and ZrO₂ concentration of 50% by weight relative to the solid content, and a proportion of the cured resin and the polymerization initiator of 50% by weight relative to the solid content, was prepared, and thereby a hard coating liquid 3 was produced.

### (Production of hard coating liquid 4)

An ultraviolet-curable hard coating, KRM8495 (manufactured by Daicel-Cytec Co., Ltd.), was added to an ATO dispersion liquid (product name: ATO Dispersion Liquid, manufactured by Mitsubishi Materials Corp.), and a mixture having a total solid content of 30% by weight, an ATO concentration of 40% by weight relative to the solid content, and a proportion of the cured resin and the polymerization initiator of 60% by weight relative to the solid content, was prepared. Thereby, a hard coating liquid 4 was produced.

### (Production of hard coating liquid 5)

An ultraviolet-curable hard coating, KRM8495 (manufactured by Daicel-Cytec Co., Ltd.), was added to an ITO dispersion liquid (product name: ITO Dispersion Liquid, manufactured by Mitsubishi Materials Corp.), and a mixture having a total solid content of 30% by weight, an ITO concentration of 50% by weight relative to the solid content, and a proportion of the cured resin and the polymerization initiator of 50% by weight relative to the solid content, was prepared. Thereby, a hard coating liquid 4 was produced.

### (Production of primer liquid)

An aqueous solution of a polyvinyl acetal resin was prepared by adding a polyvinyl acetal resin (product name: S-LEC KW-1, degree of acetalization 9% by mole, manufactured by Sekisui Chemical Co., Ltd.) at a proportion of 10% by weight to 90% by weight of water, and thus a primer liquid was produced.

### [Example 1]

Simultaneous multilayer coating of 9 layers in total was carried out using a slide hopper coating apparatus capable of 9-layer multilayer coating, such that while the coating liquid for a low refractive index layer L1 and the coating liquid for a high refractive index layer H1 were kept warm at 45°C, low refractive index layers and high refractive index layers were formed on a polyethylene terephthalate film (manufactured by Toyobo Co., Ltd., A4300: both-sided easily adhesive layer, 200 m in length x 210 mm in width) having a thickness of 50 µm and heated to 45°C, with the lowermost layer and the uppermost layer being low refractive index layers, while the other layers being laminated alternately, and the film thickness upon drying was 150 nm for each of the low refractive index layers, and 130 nm for each of the high refractive index layers. Meanwhile, regarding the confirmation of a mixed region between layers (mixed layer) and the measurement (confirmation) of the film thickness, a laminated film (infrared shielding film sample) was cut, and the cut surface was analyzed with an XPS surface analyzer to measure the amounts of existence of the high refractive index material (TiO₂) and the low refractive index material (SiO₂). Thereby, it was confirmed that the above-described film thicknesses of the various layers were secured.

Immediately after coating, the layers were set by blowing cold air at 5°C. At this time, the time taken until nothing stuck to the finger even if the surface was touched with a finger (setting time) was 5 minutes.

After completion of setting, the layers were dried by blowing hot air at 80°C, and thus a multilayer coating product composed of 9 layers was produced.

On the back surface of the 9-layer multilayer coating product (substrate surface on the opposite side of the substrate surface where 9-layer multilayer coating was made (back surface)), 9-layer multilayer coating was further carried out.

The primer liquid was applied on any one of the surfaces using a microgravure coater, and a primer layer was formed to obtain a dried film thickness of 1 µm.

The hard coating liquid 1 was applied on the primer layer similarly using a gravure coater, and the hard coating liquid was dried at a constant rate drying zone temperature of 50°C and a decreasing rate drying zone temperature of 90°C. Subsequently, the coating layer was cured using an ultraviolet lamp at an illuminance of the irradiation unit of 100 mW/cm², and an amount of irradiation of 0.2 J/cm², and thus a hard coating layer was formed so as to obtain a dried film thickness of 5.7 µm. Thus, an infrared shielding film 1 was produced.

### [Example 2]

An infrared shielding film 2 was produced in the same manner as in Example 1, except that the AZO solid content concentration of the hard coating liquid 1 of Example 1 was changed from 50% by weight to 60% by weight (the proportion of the cured resin and the polymerization initiator was 40% by weight), and the film was produced so as to obtain a dried film thickness of 5.4 µm.

### [Example 3]

An infrared shielding film 3 was produced in the same manner as in Example 1, except that the AZO solid content concentration of the hard coating liquid 1 of Example 1 was changed from 50% by weight to 70% by weight (the proportion of the cured resin and the polymerization initiator was 30% by weight), and the film was produced so as to obtain a dried film thickness of 5.0 µm.

### [Example 4]

An infrared shielding film 4 was produced in the same manner, except that the hard coating liquid 1 of Example 1 was changed to the hard coating liquid 2, and the dried film thickness was adjusted to 6.5 µm.

### [Example 5]

An infrared shielding film 5 was produced in the same manner as in Example 1, except that the hard coating liquid 1 of Example 1 was changed to the hard coating liquid 3, and the dried film thickness was adjusted to 5.1 µm.

### [Comparative Example 1]

An infrared shielding film 6 was produced in the same manner as in Example 1, except that the hard coating liquid 1 of Example 1 was changed to the hard coating liquid 4, and the dried film thickness was adjusted to 5.2 µm.

### [Comparative Example 2]

An infrared shielding film 7 was produced in the same manner as in Comparative Example 1, except that the ATO solid content concentration of the hard coating liquid 3 of Comparative Example 1 was changed from 40% by weight to 50% by weight (the proportion of the cured resin and the polymerization initiator was 50% by weight), and the film was produced so as to obtain a dried film thickness of 4.6 µm.

### [Comparative Example 3]

An infrared shielding film 8 was produced in the same manner as in Comparative Example 1, except that the ATO solid content concentration of the hard coating liquid 4 of Comparative Example 1 was changed from 40% by weight to 60% by weight (the proportion of the cured resin and the polymerization initiator was 40% by weight), and the film was produced so as to obtain a dried film thickness of 3.6 µm.

### [Comparative Example 4]

An infrared shielding film 9 was produced in the same manner as in Comparative Example 1, except that the ATO solid content concentration of the hard coating liquid 4 of Comparative Example 1 was changed from 40% by weight to 70% by weight (the proportion of the cured resin and the polymerization initiator was 30% by weight), and the film was produced so as to obtain a dried film thickness of 3.2 µm.

### [Comparative Example 5]

An infrared shielding film 10 was produced in the same manner as in Comparative Example 1, except that the ATO solid content concentration of the hard coating liquid 4 of Comparative Example 1 was changed from 40% by weight to 80% by weight (the proportion of the cured resin and the polymerization initiator was 20% by weight), and the film was produced so as to obtain a dried film thickness of 2.8 µm.

### [Comparative Example 6]

An infrared shielding film 10 was produced in the same manner as in Comparative Example 1, except that the hard coating liquid 1 of Comparative Example 1 was changed to the hard coating liquid 5, and the film was produced so as to obtain a dried film thickness of 3.7 µm.

### [Comparative Example 7]

An infrared shielding film 12 was produced in the same manner as in Comparative Example 6, except that the ATO solid content concentration of the hard coating liquid 5 of Comparative Example 6 was changed from 50% by weight to 60% by weight (the proportion of the cured resin and the polymerization initiator was 40% by weight), and the film was produced so as to obtain a dried film thickness of 3.1 µm.

### [Comparative Example 8]

An infrared shielding film 13 was produced in the same manner as in Comparative Example 6, except that the ATO solid content concentration of the hard coating liquid 5 of Comparative Example 6 was changed from 50% by weight to 70% by weight (the proportion of the cured resin and the polymerization initiator was 30% by weight), and the film was produced so as to obtain a dried film thickness of 2.7 µm.

### [Comparative Example 9]

An infrared shielding film 14 was produced in the same manner as in Comparative Example 6, except that the ATO solid content concentration of the hard coating liquid 5 of Comparative Example 6 was changed from 50% by weight to 80% by weight (the proportion of the cured resin and the polymerization initiator was 20% by weight), and the film was produced so as to obtain a dried film thickness of 2.3 µm.

The configurations of the infrared shielding films 1 to 14 are summarized in the following Table 2.

**[Table 2]**

| | Kind of hard coating | Kind of IR absorber | Inorganic nanoparticle concentration (solid content weight ratio) | Film thickness |
|---|---|---|---|---|
| Example 1 | Hard coating liquid 1 | AZO | 50% | 5.7 µm |
| Example 2 | ↓ | ↓ | 60% | 5.4 µm |
| Example 3 | ↓ | ↓ | 70% | 5.0 µm |
| Example 4 | Hard coating liquid 2 | GZO | 70% | 6.5 µm |
| Example 5 | Hard coating liquid 3 | LaB₆, AZO | 50% | 5.1 µm |
| Comparative Example 1 | Hard coating liquid 4 | ATO | 40% | 5.2 µm |
| Comparative Example 2 | ↓ | ↓ | 50% | 4.6 µm |
| Comparative Example 3 | ↓ | ↓ | 60% | 3.6 µm |
| Comparative Example 4 | ↓ | ↓ | 70% | 3.2 µm |
| Comparative Example 5 | ↓ | ↓ | 80% | 2.8 µm |
| Comparative Example 6 | Hard coating liquid 5 | ITO | 50% | 3.7 µm |
| Comparative Example 7 | ↓ | ↓ | 60% | 3.1 µm |
| Comparative Example 8 | ↓ | ↓ | 70% | 2.7 µm |
| Comparative Example 9 | ↓ | ↓ | 80% | 2.3 µm |

### [Evaluation methods]

For the measurement of the properties described below, measurement was made at a temperature of 23°C±2°C and a relative humidity of (50 ± 5)%, unless particularly stated otherwise.

### (Measurement of transmittance)

Transmittance of a measurement sample to transmitted light from 25 nm to 2500 nm was measured using a spectrophotometer, "U-4100", manufactured by Shimadzu Corp., and the average transmittance to ultraviolet light (250 nm to 400 nm), Tuv, and the average transmittance to visible light (400 nm to 780 nm), Tvis, were calculated. Next, data processing of the measurement values and the weighted solar reflectance index was carried out according to the method described in JIS R3106, and the solar reflectance and solar transmittance were determined. Furthermore, the solar heat gain coefficient (Tts) was determined.

### (Pencil hardness)

The pencil hardness is measured according to the standard of JIS K5600-5-4. The test is carried out by positioning the pencil at an angle of 45°, applying a load of 500 g, and scratching the surface of each film mirror sample (cured resin layer side). The samples were rated based on the pencil hardness symbols where no scratch was generated in four or more times out of five times. The measurement was made using a pencil hardness meter (product No.: 553-M1) manufactured by Yasuda Seiki Seisakusho, Ltd.

### (Steel wool test)

The functional layer surface (cured resin layer side) of a sample was rubbed with #0000 steel wool by 10 reciprocations under a load of 500 g/cm², at a stroke of 100 mm and a rate of 30 mm/sec, and then the surface was visually inspected to measure the number of scratches.

### (Bendability test (cylindrical mandrel method))

According to JIS K5600-5-1:1999, the minimum diameter at which, when the film was bent with the hard coated surface being disposed on the outer side, the hard coated surface began to crack, was measured using a 1506 Mandrel Bending Test Machine (manufactured by Elcometer, Ltd.).

### (Evaluation of accelerated weather resistance test)

A produced sample was attached on a glass piece, and the sample was irradiated using an EYE Super Xenon Tester (model: XER-W75) manufactured by Iwasaki Electric Co., Ltd., in an environment at 23°C and 85%RH for 60 days. Subsequently, the external appearance was checked, and scratch resistance was checked by a steel wool test.

The results are presented in the following Table 3.

**[Table 3-1]**

| | Initial characteristics | | | | | |
|---|---|---|---|---|---|---|
| | Tuv | Tvis | Tts | Number of steel wool scratches | Pencil hardness | Bendability |
| Example 1 | 14.8% | 70.9% | 54.0% | 0 | B | 10 mm |
| Example 2 | 14.7% | 71.6% | 54.5% | 0 | B | 8 mm |
| Example 3 | 14.7% | 71.2% | 53.8% | 0 | B | 8 mm |
| Example 4 | 14.5% | 70.5% | 54.5% | 6 | 2B | 8 mm |
| Example 5 | 17.1% | 65.3% | 55.0% | 0 | B | 8 mm |
| Comparative Example 1 | 23.7% | 71.0% | 54.5% | 0 | B | 18 mm |
| Comparative Example 2 | 23.9% | 71.1% | 53.9% | 16 | 2B | 8 mm |
| Comparative Example 3 | 24.2% | 70.9% | 54.0% | 21 | 3B | 8 mm |
| Comparative Example 4 | 24.1% | 71.5% | 53.5% | 29 | 3B | 8 mm |
| Comparative Example 5 | 23.5% | 71.6% | 54.1% | 60 or more | 4B | 8 mm |
| Comparative Example 6 | 17.4% | 73.5% | 53.6% | 19 | 2B | 8 mm |
| Comparative Example 7 | 16.5% | 73.3% | 53.6% | 34 | 3B | 8 mm |
| Comparative Example 8 | 17.0% | 73.5% | 53.1% | 45 | 4B | 8 mm |
| Comparative Example 9 | 17.2% | 73.1% | 54.3% | 60 or more | 4B | 8 mm |

**[Table 3-2]**

| | After accelerated weather resistance test | |
|---|---|---|
| | External appearance test | Number of steel wool scratches |
| Example 1 | Normal | 0 |
| Example 2 | Normal | 0 |
| Example 3 | Normal | 0 |
| Example 4 | Normal | 7 |
| Example 5 | Normal | 0 |
| Comparative Example 1 | End surface turn-over | 20 |
| Comparative Example 2 | Normal | 29 |
| Comparative Example 3 | Normal | 35 |
| Comparative Example 4 | Normal | 45 |
| Comparative Example 5 | Normal | 60 or more |
| Comparative Example 6 | Normal | 21 |
| Comparative Example 7 | Normal | 35 |
| Comparative Example 8 | Normal | 45 |
| Comparative Example 9 | Normal | 60 or more |

It is clearly understood from the evaluation results presented in the tables that the various characteristics of Examples according to the present invention are superior to those of Comparative Examples. For all of the samples thus produced, the visible light transmittance satisfied the intended value. In Comparative Example 1, although hardness was relatively secured, but bending resistance was poor, and as a result of the accelerated weather resistance test, there occurred a problem that the end surface of the tacky adhesive layer turned over. In the case of other Comparative Examples, hardness was low, scratch resistance was low, and the samples could not endure steel wool in the early stages. On the contrary, in all of the Examples, the level of hardness was high, and since the samples hadbending resistance, the samples maintained durability even after a window pasting test.

Furthermore, the infrared shielding films of the Examples did not undergo weakening of the scratch resistance of the hard coating layer over time. In this regard, it is speculated that since zinc oxide-based particles have high ultraviolet absorbency, scratch resistance is maintained over a long time.

The present application is based on Japanese Patent Application No. 2012-157648 filed on July 13, 2012, the entire disclosure of which is incorporated herein by reference.

## Claims

1. An infrared shielding film comprising a substrate; an infrared reflecting layer having at least one or more low refractive index layers and at least one or more high refractive index layers laminated therein; and a cured resin layer formed at the outermost surface, laminated together,
the cured resin layer containing inorganic nanoparticles,
wherein the hardness obtainable by the pencil hardness test described in JIS K5600-5-4:1999 is from 2B to 3H; the number of scratches obtainable by a steel wool test (load 500 g/cm², 10 reciprocations) is 15 or less; and the mandrel diameter at which the hard coated surface begins to crack in the bending test described in JIS K5600-5-1:1999 (cylindrical mandrel method) is 15 mm or less.

2. The infrared shielding film according to claim 1, wherein the inorganic nanoparticles in the cured resin layer containing at least one of zinc oxide and zinc oxide doped with another metal.

3. The infrared shielding film according to claim 2, wherein the zinc oxide doped with another metal is antimony-doped zinc oxide, indium-doped zinc oxide, gallium-doped zinc oxide, or aluminum-doped zinc oxide.

4. The infrared shielding film according to any one of claims 1 to 3, wherein the content of the inorganic nanoparticles is 50% to 70% by weight relative to 100% by weight of the cured resin layer.

5. The infrared shielding film according to any one of claims 1 to 4, wherein at least one of the low refractive index layer and the high refractive index layer of the infrared reflecting layer contains metal oxide particles.
